# EUROPEAN PATENT APPLICATION

(11) **EP 4 819 225 A1**
(43) Date of publication of application: **07.10.2026**
(21) Application number: 24918022.5
(22) Date of filing: 13.08.2024
(51) Int. Cl.: H01M 4/139, H01M 10/0587

(54) **ELECTRODE SHEET PROCESSING DEVICE, BATTERY PRODUCTION LINE, AND CONTROL METHOD FOR ELECTRODE SHEET PROCESSING DEVICE**

(30) Priority: 17.01.2024 CN 202410067677
(71) Applicant: Contemporary Amperex Technology Co., Limited, Ningde, Fujian 352100 (CN)
(72) Inventor: QIAO, Yinyong, Ningde, Fujian 352100 (CN); YU, Ruchu, Ningde, Fujian 352100 (CN)
(74) Representative: Lorenz Seidler Gossel Part. mbB
(86) International application number: PCT/CN2024/111828
(87) International publication number: WO 2025/152410

(57) **Abstract**

An electrode sheet processing device, a battery production line, and a control method for electrode sheet processing device are provided, relating to the field of battery production technologies. The electrode sheet processing device can improve the production efficiency of electrode sheet processing and also improve the qualification rate of electrode sheet processing. The electrode sheet processing device includes an unwinding mechanism (1), a tab forming mechanism (2), a scrap removal mechanism (3), and a slitting mechanism (4); where the unwinding mechanism (1) is configured to carry a wound electrode sheet to be processed (01); the tab forming mechanism (2) is disposed on an extension path (C) of the electrode sheet to be processed (01) and is configured to cut the electrode sheet to be processed (01); the scrap removal mechanism (3) is disposed on an extension path (C) of a cut electrode sheet (02) and is located on a side of the tab forming mechanism (2) away from the unwinding mechanism (1), and the scrap removal mechanism (3) is configured to remove waste material formed after the electrode sheet to be processed (01) is cut; and along the extension path (C) of the cut electrode sheet (02), the slitting mechanism (4) is disposed on a side of the scrap removal mechanism (3) away from the tab forming mechanism (2), and the slitting mechanism (4) is configured to slit the cut electrode sheet (02).

## Description

### CROSS-REFERENCE TO RELATED APPLICATIONS

This disclosure is based on Chinese Patent Application No. 202410067677.0, filed on January 17, 2024, and entitled "ELECTRODE SHEET PROCESSING DEVICE, BATTERY PRODUCTION LINE, AND CONTROL METHOD FOR ELECTRODE SHEET PROCESSING DEVICE", and claims priority to this Chinese patent application. This Chinese Patent Application is incorporated herein by reference in its entirety.

### TECHNICAL FIELD

This disclosure relates to the field of battery production technologies, and particularly to an electrode sheet processing device, a battery production line, and a control method for electrode sheet processing device.

### BACKGROUND

New energy batteries are being increasingly widely used in daily life and industry. For example, new energy vehicles equipped with batteries have been widely adopted, and batteries are also increasingly used in the fields such as energy storage.

With the rapid development of the lithium battery industry, the demand for high-quality power battery production capacity is increasing. Die-cutting and slitting, as key processes for producing electrode sheets of secondary batteries, have a significant impact on the cost of the finally produced secondary batteries, particularly in terms of production efficiency and product qualification rate. In the related art, die-cutting and slitting require substantial equipment investment and occupy a large floor area. There is a need for an electrode sheet processing device with a more reasonable layout, a smaller footprint, higher production efficiency, and an improved product qualification rate.

### SUMMARY OF THE INVENTION

This disclosure provides an electrode sheet processing device, a battery production line, and a control method for electrode sheet processing device. It can improve the qualification rate while also improving production efficiency of electrode sheet processing.

A first aspect of this disclosure provides an electrode sheet processing device, the electrode sheet processing device including an unwinding mechanism, a tab forming mechanism, a scrap removal mechanism, and a slitting mechanism; where the unwinding mechanism is configured to carry a wound electrode sheet to be processed; the tab forming mechanism is disposed on an extension path of the electrode sheet to be processed and is configured to cut the electrode sheet to be processed; the scrap removal mechanism is disposed on an extension path of the cut electrode sheet and is located on a side of the tab forming mechanism away from the unwinding mechanism, and the scrap removal mechanism is configured to remove waste material formed after the electrode sheet to be processed is cut; and along the extension path of the cut electrode sheet, the slitting mechanism is disposed on a side of the scrap removal mechanism away from the tab forming mechanism, and the slitting mechanism is configured to slit the cut electrode sheet.

The electrode sheet processing device according to this disclosure, due to the provision of an unwinding mechanism, can carry a wound electrode sheet to be processed in the form of a roll through the unwinding mechanism, or can unfold the wound electrode sheet to be processed in the form of a roll into a strip-shaped electrode sheet to be processed through the unwinding mechanism. Moreover, a tab forming mechanism is disposed along the extension path of the electrode sheet to be processed, so that the electrode sheet to be processed can be cut through the tab forming mechanism to form a tab on the electrode sheet to be processed. Furthermore, a scrap removal mechanism is disposed on an extension path of a cut electrode sheet, so that the waste material adhering to the cut electrode sheet can be forcibly separated through the scrap removal mechanism, so as to reduce the risk of the waste material moving with the cut electrode sheet, causing deformation of the tab, or causing breakage of the cut electrode sheet. Additionally, a slitting mechanism is further disposed on the extension path of the cut electrode sheet, so that the cut electrode sheet can be slit through the slitting mechanism, the cut electrode sheet being slit into at least two slit electrode sheets.

Compared with the related art, this disclosure sequentially provides a tab forming mechanism and a slitting mechanism along the extension path of the electrode sheet to be processed, which can sequentially cut and slit the electrode sheet to be processed, separately. This allows for continuous cutting and slitting of the electrode sheet to be processed in one device, thereby improving the production efficiency of electrode sheet processing, while also reducing the space occupied by the electrode sheet processing device. Moreover, a scrap removal mechanism is disposed between the tab forming mechanism and the slitting mechanism, which forcibly separates the adhering waste material through the scrap removal mechanism, thereby reducing the adverse effects of waste material on the cut electrode sheet, and thus improving the qualification rate of electrode sheet processing.

In a possible implementation of this disclosure, the scrap removal mechanism includes an air knife mechanism, where the air knife mechanism includes an air knife bracket, an air knife roller shaft, and an air knife body; where the air knife roller shaft is rotatably mounted on the air knife bracket, the cut electrode sheet moves in contact with the air knife roller shaft; the air knife body is mounted on the air knife bracket, the air knife body has an air outlet and an air inlet that are connected, along an axial direction of the air knife roller shaft, the air outlet is directed from a center of the cut electrode sheet towards a tab on the cut electrode sheet, and the air inlet is configured to be connected to an air source.

Since an air knife roller shaft is rotatably provided on the air knife bracket, the cut electrode sheet can be supported by the air knife roller shaft during its movement through the air knife mechanism, thereby enabling the cut electrode sheet to move stably to the next station along a fixed path around the air knife roller shaft. Moreover, an air knife body is provided on the air knife bracket, and the air knife body can be connected to a high-pressure air source; and the air outlet of the air knife body is directed from the center of the cut electrode sheet towards the tab of the cut electrode sheet, so that the waste material attached to the tab can be blown away from the tab by the airflow, separating the waste material from the tab, thereby reducing the impact of waste material not separated from the tab on the tab.

In a possible implementation of this disclosure, the air knife mechanism further includes a guide member, a contour cover, and a negative pressure pipeline; where the guide member is sleeved on the air knife roller shaft along a radial direction of the air knife roller shaft, and is located on a side of the tab on the air knife roller shaft away from the air outlet; the contour cover is mounted on the air knife bracket and is positioned opposite the guide member, and the contour cover has a suction inlet and a discharge outlet, where a shape of the suction inlet is adapted to a shape of the guide member, the suction inlet is located on a flow path of the airflow blown out from the air outlet, and the discharge outlet is connected to one end of the negative pressure pipeline.

Since a guide member is provided on the air knife roller shaft of the air knife mechanism, the movement path of the waste material blown away from the tab by the airflow can be guided by the guide member. Moreover, a contour cover adjacent to the guide member is provided, which allows the waste material passing through the guide member to enter the contour cover, so that the waste material can be collected by the contour cover. Furthermore, a negative pressure pipeline is connected to the discharge outlet of the contour cover, so that negative pressure can be generated at the suction inlet of the contour cover through the negative pressure pipeline, which is beneficial for the waste material to enter the contour cover. Additionally, the waste material entering the contour cover can be transported to a storage location through the negative pressure pipeline.

In a possible implementation of this disclosure, the scrap removal mechanism further includes a compression assembly, where the compression assembly is connected to an end of the negative pressure pipeline away from the contour cover, and the compression assembly is configured to compress and accommodate the waste material.

Since a compression assembly is provided in the scrap removal mechanism and the compression assembly is connected to the negative pressure pipeline of the air knife mechanism, the waste material transported through the negative pressure pipeline can enter the compression assembly; and the waste material can be compressed by the compression assembly to reduce the space occupied by the waste material, which is beneficial for storing the waste material and can increase the accommodation capacity of the compression assembly for the waste material.

In a possible implementation of this disclosure, the electrode sheet processing device further includes a first detection assembly, where along the extension path of the cut electrode sheet, the first detection assembly is disposed on a side of the air knife mechanism away from the tab forming mechanism, and the first detection assembly is configured to acquire image data of the cut electrode sheet.

Since a first detection assembly is further provided along the extension path of the cut electrode sheet, image data of the cut electrode sheet cleaned by the air knife mechanism can be acquired through the first detection assembly, thereby allowing for determining whether the processing quality of the cut electrode sheet is qualified based on the acquired image data.

In a possible implementation of this disclosure, the electrode sheet processing device further includes a first marking assembly, where along the extension path of the cut electrode sheet, the first marking assembly is disposed on a side of the first detection assembly away from the air knife mechanism, the first detection assembly is electrically connected to the first marking assembly, the first detection assembly is further configured to send a marking instruction to the first marking assembly based on waste zone information, and the marking instruction is used to control the first marking assembly to mark the waste zone on the cut electrode sheet.

Since a first marking assembly electrically connected to the first detection assembly is provided in the electrode sheet processing device, the first marking assembly can mark the waste zone on the cut electrode sheet, thereby facilitating the processing of the cut electrode sheet containing the waste zone in subsequent processing steps, and thus reducing the risk of unqualified cut electrode sheets being used to manufacture battery cells.

In a possible implementation of this disclosure, the slitting mechanism includes a first support base, a second support base, a first knife shaft, a second knife shaft, a slitting knife, and an adjustment assembly; where along a radial direction of the first knife shaft, the first support base and the second support base are connected; the first knife shaft is rotatably disposed on the first support base, the second knife shaft is rotatably disposed on the second support base, and the first knife shaft and the second knife shaft are disposed in the same axial direction; the corresponding slitting knives are respectively disposed on the first knife shaft and the second knife shaft; the adjustment assembly is disposed between the first support base and the second support base, and along the radial direction of the first knife shaft, the adjustment assembly is configured to adjust a distance between the first support base and the second support base.

Since a first support base and a second support base are provided in the slitting mechanism, the first knife shaft and the second knife shaft can be respectively mounted on the first support base and the second support base, which facilitates the mounting of the two knife shafts. Moreover, an adjustment assembly is provided between the first support base and the second support base, so that the distance between the first support base and the second support base can be adjusted through the adjustment assembly, thereby adjusting the distance between the first knife shaft and the second knife shaft. In this way, even if slitting knives of different diameters are mounted on the first knife shaft and the second knife shaft, the adjustment assembly can be used to adjust the two slitting knives to align with each other, thereby improving the applicability of the slitting mechanism.

In a possible implementation of this disclosure, the adjustment assembly includes an adjustment member and a locking member; where the adjustment member is slidably disposed between the first support base and the second support base, the locking member is mounted on the first support base or the second support base, the locking member abuts against the adjustment member, and during the movement of the locking member relative to the first support base in a direction approaching or moving away from the adjustment member, the locking member is able to drive the adjustment member to move relative to the first support base, so as to adjust the distance between the first support base and the second support base.

Since the adjustment member is slidably disposed between the first support base and the second support base, the adjustment member can move relative to the first support base to change the distance between the first support base and the second support base. Moreover, the locking member is mounted on the first support base or the second support base, and the locking member can drive the adjustment member to move, so as to facilitate the movement of the adjustment member relative to the first support base; and after the distance between the first support base and the second support base is adjusted, the locking member can also fix the adjustment member relative to the first support base so that it cannot move freely, thereby keeping the distance between the first support base and the second support base constant.

In a possible implementation of this disclosure, the slitting mechanism further includes a slitting positioning assembly, where the slitting positioning assembly is mounted on the first support base and/or the second support base, and the slitting positioning assembly is configured to limit the position of the second support base relative to the first support base.

Since a slitting positioning assembly is mounted on the first support base and/or the second support base, the position of the second support base relative to the first support base can be limited by the slitting positioning assembly, such as limiting the position of the second support base relative to the first support base in the axial direction of the first knife shaft, thereby improving the mounting accuracy of the first support base and the second support base, and reducing the risk of unnecessary movement of the second support base relative to the first support base, thereby improving the mounting accuracy of the slitting knife.

In a possible implementation of this disclosure, the slitting mechanism further includes a measuring member, where one end of the measuring member is connected to the first support base, another end is connected to the second support base, and the measuring member is configured to measure a spacing between the first support base and the second support base.

Since a measuring member is provided between the first support base and the second support base, during the process of adjusting the distance between the first support base and the second support base, the measuring member can provide real-time feedback on the numerical value of the distance between the first support base and the second support base, which facilitates quick and accurate adjustment of the spacing between the first support base and the second support base.

In a possible implementation of this disclosure, the scrap removal mechanism further includes a cleaning mechanism, where along the extension path of the slit electrode sheet, the cleaning mechanism is disposed on a side of the slitting mechanism away from the unwinding mechanism, the cleaning mechanism is connected to the compression assembly, the cleaning mechanism is configured to remove impurities on the slit electrode sheet, and the compression assembly is configured to compress and accommodate the impurities.

Since a cleaning mechanism is disposed at the rear end of the slitting mechanism along the extension path of the slit electrode sheet, the cleaning mechanism can remove impurities adhering to the cut electrode sheet, so as to keep the cut electrode sheet clean, thereby improving the quality of the battery cell manufactured by sampling the cut electrode sheet.

In a possible implementation of this disclosure, the electrode sheet processing device further includes a plurality of driving mechanisms, where the plurality of driving mechanisms are disposed on the extension path of the cut electrode sheet, and the driving mechanisms are configured to drive the cut electrode sheet or the slit electrode sheet to move in a direction away from the tab forming mechanism.

Since a plurality of driving mechanisms are disposed along the extension path of the cut electrode sheet, the driving mechanisms can drive the cut electrode sheet or the slit electrode sheet to move, allowing the cut electrode sheet or the slit electrode sheet to reach the position of the next processing mechanism; additionally, by controlling the magnitude of the driving force of two adjacent driving mechanisms, the tension of the cut electrode sheet or the slit electrode sheet located between the two adjacent driving mechanisms can be controlled, thereby improving the stability of the movement path of the continuous electrode sheet to be processed, cut electrode sheet, and slit electrode sheet.

In a possible implementation of this disclosure, the electrode sheet processing device further includes a winding mechanism, where along the extension path of the slit electrode sheet, the winding mechanism is disposed on a side of the slitting mechanism away from the scrap removal mechanism, and the winding mechanism is configured to wind the slit electrode sheet.

Since a winding mechanism is provided on the extension path of the slit electrode sheet, the winding mechanism can automatically wind and collect the slit electrode sheet, so that the slit electrode sheet forms an electrode sheet roll, thereby facilitating the storage and use of the electrode sheet to be processed after various processing steps are completed.

In a possible implementation of this disclosure, the winding mechanism includes a first winding assembly, a second winding assembly, and a winding roll-changing assembly; where the first winding assembly and the second winding assembly are both disposed on the extension path of the slit electrode sheet, the winding roll-changing assembly is disposed between the first winding assembly and the second winding assembly, and the winding roll-changing assembly is configured to guide the slit electrode sheet to move towards the first winding assembly or the second winding assembly, so as to wind the slit electrode sheet by the first winding assembly or the second winding assembly.

Since the winding mechanism is provided with a first winding assembly and a second winding assembly, and a winding roll-changing assembly is provided between the first winding assembly and the second winding assembly, the winding roll-changing assembly can guide the slit electrode sheet to the first winding assembly or the second winding assembly, thereby enabling continuous winding of the slit electrode sheet, without needing to stop the processing equipment to replace the electrode sheet roll after one winding assembly completes winding an electrode sheet roll, thus improving the processing efficiency of the electrode sheet to be processed.

In a possible implementation of this disclosure, the winding mechanism further includes a shaping assembly, where the shaping assembly is disposed between the first winding assembly and the second winding assembly, the shaping assembly is configured to dispose a shaping member on the electrode sheet roll, so as to fix a terminal cut edge of the electrode sheet roll through the shaping member, and the electrode sheet roll is formed by winding the slit electrode sheet by the first winding assembly or the second winding assembly.

Since a shaping assembly is provided between the first winding assembly and the second winding assembly, the shaping assembly can dispose a shaping member on the wound electrode sheet roll, so as to fix the terminal cut edge on the electrode sheet roll through the shaping member, thereby reducing the risk of the electrode sheet roll loosening or unwinding.

In a possible implementation of this disclosure, the winding mechanism further includes a shaping detection assembly, where the shaping detection assembly is electrically connected to the shaping assembly, the shaping detection assembly is configured to acquire position information of the terminal cut edge on the electrode sheet roll and send a positioning instruction to the shaping assembly based on the position information, and the positioning instruction is used to control the shaping assembly to dispose the shaping member.

Since a shaping detection assembly electrically connected to the shaping assembly is provided in the winding mechanism, the shaping detection assembly can acquire position information of the terminal cut edge on the electrode sheet roll, thereby allowing for sending a positioning instruction to the shaping assembly based on the position information, which in turn can control the shaping assembly to move to a position aligned with the terminal cut edge. Thus the shaping member can be disposed on the terminal cut edge, thereby improving the accuracy of setting the shaping member on the electrode sheet roll.

In a possible implementation of this disclosure, the winding mechanism further includes a pressing assembly, where the pressing assembly is provided at each of positions corresponding to the first winding assembly and the second winding assembly, and the pressing assembly is configured to press against the electrode sheet roll that abuts against the first winding assembly and the second winding assembly.

Since each winding assembly is provided with one pressing assembly, during the process of winding the slit electrode sheet by the first winding assembly or the second winding assembly, the pressing assembly can be pressed against the electrode sheet roll, thereby improving the flatness of the slit electrode sheet during winding.

In a possible implementation of this disclosure, along a direction perpendicular to the extension path of the electrode sheet to be processed, the unwinding mechanism and the winding mechanism are located on a first side of the electrode sheet to be processed, and the scrap removal mechanism, the tab forming mechanism, and the slitting mechanism are located on a second side of the electrode sheet to be processed, the first side and the second side being opposite sides of the electrode sheet to be processed.

Since the unwinding mechanism, the winding mechanism, and other mechanisms in the electrode sheet processing device are separately disposed on two sides of the electrode sheet to be processed, the loading and unloading zone and the manually operable zone can be located in two unconnected zones, thereby improving operational safety.

In a possible implementation of this disclosure, the unwinding mechanism includes a first unwinding assembly, a second unwinding assembly, and an unwinding roll-changing assembly; where the first unwinding assembly and the second unwinding assembly are both disposed on the extension path of the electrode sheet to be processed, the unwinding roll-changing assembly is disposed between the first unwinding assembly and the second unwinding assembly, and the unwinding roll-changing assembly is configured to guide the electrode sheet to be processed on the first unwinding assembly to move to approach the electrode sheet to be processed on the second unwinding assembly, or to guide the electrode sheet to be processed on the second unwinding assembly to move to approach the electrode sheet to be processed on the first unwinding assembly.

Since the unwinding mechanism is provided with a first unwinding assembly and a second unwinding assembly, and an unwinding roll-changing assembly is provided between the first unwinding assembly and the second unwinding assembly, the unwinding roll-changing assembly can guide the electrode sheet to be processed on one unwinding assembly to the electrode sheet to be processed on the other unwinding assembly, thereby continuously supplying the electrode sheet to be processed to the electrode sheet processing device. Moreover, one of the first unwinding assembly and the second unwinding assembly can be used as a buffer station to place the electrode sheet to be processed.

In a possible implementation of this disclosure, the unwinding mechanism further includes a connecting assembly, where the connecting assembly is disposed between the first unwinding assembly and the second unwinding assembly, the connecting assembly is configured to dispose a connecting member on the electrode sheet to be processed on the first unwinding assembly or the second unwinding assembly, and the connecting member is configured to connect the electrode sheet to be processed on the first unwinding assembly and the electrode sheet to be processed on the second unwinding assembly.

Since a connecting assembly is provided between the first unwinding assembly and the second unwinding assembly, the connecting assembly can dispose a connecting member on the electrode sheet to be processed on the first unwinding assembly or the second unwinding assembly, so that the electrode sheets to be processed on the first unwinding assembly and the second unwinding assembly can be connected together under the guidance of the unwinding roll-changing assembly.

In a possible implementation of this disclosure, the unwinding mechanism further includes an unwinding detection member, where the unwinding detection member is electrically connected separately to the first unwinding assembly and the second unwinding assembly, the unwinding detection member is configured to detect a lateral shift position of the electrode sheet to be processed on the extension path and send a correction instruction to the first unwinding assembly or the second unwinding assembly based on the lateral shift position, and the correction instruction is used to control the first unwinding assembly or the second unwinding assembly to move along an axial direction of the first unwinding assembly.

Since an unwinding detection member is provided in the unwinding mechanism, the unwinding detection member can detect whether the electrode sheet to be processed has a lateral shift on the extension path. If it is determined that the electrode sheet to be processed has a lateral shift, a correction instruction can be sent to the first unwinding assembly or the second unwinding assembly to control the first unwinding assembly or the second unwinding assembly to move along the axial direction of the first unwinding assembly, thereby driving the electrode sheet to be processed to return to the preset path. This can reduce the risk of the electrode sheet to be processed being pulled off by lateral tension, and can ensure that the electrode sheet to be processed always moves along a fixed extension path.

In a possible implementation of this disclosure, the electrode sheet processing device further includes a web splicing mechanism, where along the extension path of the electrode sheet to be processed, the web splicing mechanism is disposed between the unwinding mechanism and the tab forming mechanism, and the web splicing mechanism is configured to splice a broken electrode sheet to be processed.

Since a web splicing mechanism is disposed between the unwinding mechanism and the tab forming mechanism, the web splicing structure facilitates manual splicing of a broken electrode sheet to be processed.

In a possible implementation of this disclosure, the electrode sheet processing device further includes a second detection assembly, where along the extension path of the electrode sheet to be processed, the second detection assembly is disposed between the unwinding mechanism and the tab forming mechanism, and the second detection assembly is configured to acquire quality information of the electrode sheet to be processed.

Since a second detection assembly is provided between the unwinding mechanism and the tab forming mechanism, the second detection assembly can acquire quality information of the electrode sheet to be processed. If it is determined that the electrode sheet to be processed has quality defects, the electrode sheet to be processed with quality defects can be processed in time, thereby reducing the risk of unqualified electrode sheets entering subsequent battery processing steps.

In a possible implementation of this disclosure, the electrode sheet processing device further includes a reinforcement mechanism, where along the extension path of the electrode sheet to be processed, the reinforcement mechanism is disposed on a side of the tab forming mechanism close to the unwinding mechanism, the reinforcement mechanism is configured to prepare a reinforcement portion in a tab zone on the electrode sheet to be processed, and the tab zone includes a zone on the electrode sheet to be processed where tabs are formed by cutting.

Since a reinforcement mechanism is disposed on the side of the tab forming mechanism close to the unwinding mechanism, the reinforcement mechanism can form a reinforcement portion in the tab zone on the electrode sheet to be processed, thereby enabling the tab zone of the electrode sheet to be processed passing through the tab forming mechanism to have higher strength.

In a possible implementation of this disclosure, the electrode sheet processing device further includes a third detection assembly, along the extension path of the electrode sheet to be processed, the third detection assembly is disposed on a side of the tab forming mechanism close to the unwinding mechanism, and the third detection assembly is configured to detect a length of the electrode sheet to be processed passing through the third detection assembly.

Since a third detection assembly is disposed on the side of the tab forming mechanism close to the unwinding mechanism, the third detection assembly can detect the length of the cut electrode sheet that has passed through the tab forming mechanism, and the length data of the obtained cut electrode sheet can be known in time.

A second aspect of this disclosure provides a battery production line, the battery production line including: the electrode sheet processing device provided in any one of the above items, a coating device, a cell winding device, and a conveying device; where the coating device is configured to apply an active slurry on a current collector to form an electrode sheet to be processed; the cell winding device is configured to wind a separator and a cut electrode sheet to form a battery cell; and the conveying device is configured to transport the electrode sheet to be processed to the unwinding mechanism.

Since the battery production line is provided with an electrode sheet processing device, the production efficiency of electrode sheets can be improved, and the qualification rate of electrode sheet processing can also be improved, thereby improving the efficiency and qualification rate of battery processing.

A third aspect of this disclosure provides a control method for electrode sheet processing device, where the electrode sheet processing device includes an unwinding mechanism, a tab forming mechanism, a scrap removal mechanism, and a slitting mechanism; and the control method for electrode sheet processing device includes: in response to a processing instruction, controlling the unwinding mechanism to perform an unwinding action, so that the wound electrode sheet to be processed carried on the unwinding mechanism unfolds along an extension path; controlling the tab forming mechanism to cut the electrode sheet to be processed, so as to form a tab on the electrode sheet to be processed; controlling the scrap removal mechanism to collect and store waste material formed by cutting the electrode sheet to be processed; and controlling the slitting mechanism to slit the cut electrode sheet, so as to slit the cut electrode sheet into at least two slit electrode sheets.

Since, in response to a processing instruction, the unwinding mechanism is controlled to perform an unwinding action, the electrode sheet processing device can accurately perform various processing actions, and the wound electrode sheet to be processed on the unwinding mechanism can be unfolded into a strip-shaped electrode sheet to be processed at a preset speed. Moreover, controlling the tab forming mechanism to cut the electrode sheet to be processed can form a tab with accurate shape and position on the cut electrode sheet. Furthermore, during the process of the tab forming mechanism cutting the electrode sheet to be processed, the scrap removal mechanism is controlled to collect and store waste material, and the scrap removal mechanism can forcibly separate the waste material adhering to the cut electrode sheet, so as to reduce the risk of the waste material moving with the cut electrode sheet, causing deformation of the tab, or causing breakage of the cut electrode sheet. Additionally, controlling the slitting mechanism to slit the cut electrode sheet can slit the cut electrode sheet into at least two slit electrode sheets, thereby obtaining the electrode sheets required for manufacturing battery cells. Therefore, the control method for electrode sheet processing device according to this disclosure, by controlling the tab forming mechanism and the slitting mechanism to sequentially cut and slit the electrode sheet to be processed, can improve the production efficiency of electrode sheet processing, and by controlling the scrap removal mechanism to forcibly separate adhering waste material, can reduce the adverse effects of waste material on the cut electrode sheet, thereby improving the qualification rate of electrode sheet processing.

In a possible implementation of this disclosure, the unwinding mechanism includes a first unwinding assembly, a second unwinding assembly, an unwinding roll-changing assembly, and a connecting assembly; where the controlling the unwinding mechanism to perform an unwinding action, so that a wound electrode sheet to be processed carried on the unwinding mechanism is enabled to unfold along an extension path includes: controlling the connecting assembly to dispose a connecting member on a first electrode sheet to be processed on one of the first unwinding assembly or the second unwinding assembly; and controlling the unwinding roll-changing assembly to guide the first electrode sheet to be processed to move to approach a second electrode sheet to be processed on the other of the first unwinding assembly or the second unwinding assembly, until the first electrode sheet to be processed and the second electrode sheet to be processed are integrally connected through the connecting member.

Since the connecting assembly is controlled to dispose a connecting member on the first electrode sheet to be processed on one of the first unwinding assembly or the second unwinding assembly, and the unwinding roll-changing assembly is controlled to guide the first electrode sheet to be processed to move to approach the second electrode sheet to be processed, the standby first electrode sheet to be processed and the second electrode sheet to be processed that is about to be used up can be integrally connected, so that the first electrode sheet to be processed can be brought into the processing mechanism of the electrode sheet processing device through the second electrode sheet to be processed, thereby enabling the electrode sheet processing device to continuously process the electrode sheet to be processed. This helps improve the utilization efficiency of the electrode sheet processing device and the processing efficiency of the electrode sheet to be processed.

In a possible implementation of this disclosure, the scrap removal mechanism includes an air knife mechanism and a compression assembly that are connected via a negative pressure pipeline; where the controlling the scrap removal mechanism to collect and store waste material formed by cutting the electrode sheet to be processed includes: controlling the air knife mechanism to blow airflow towards a tab zone on the electrode sheet to be processed, so as to bring the waste material into the negative pressure pipeline through the airflow; and controlling the compression assembly to compress the waste material that has passed through the negative pressure pipeline and is in the compression assembly, so as to reduce a volume of the waste material and store the waste material after volume reduction.

Since the air knife mechanism is controlled to blow airflow towards the tab zone on the electrode sheet to be processed, the airflow can be used as a power source, which facilitates the separation of the adhering waste material from the cut electrode sheet. Moreover, controlling the compression assembly to compress the collected waste material can reduce the volume of the waste material, which facilitates the storage of the waste material and the execution of subsequent processing steps.

In a possible implementation of this disclosure, the electrode sheet processing device further includes a winding mechanism and a driving mechanism; and the control method for electrode sheet processing device includes: controlling the winding mechanism to wind the slit electrode sheet to form an electrode sheet roll; and controlling the driving mechanism to drive the cut electrode sheet and/or the slit electrode sheet to move in a direction close to the winding mechanism, where the winding mechanism and the driving mechanism are controlled to rotate with different torques, so that a tension applied to the slit electrode sheet is greater than a tension applied to the cut electrode sheet.

Since the winding mechanism is controlled to wind the slit electrode sheet, the strip-shaped slit electrode sheet can be formed into an electrode sheet roll, which facilitates the storage and transportation of the electrode sheet roll. Moreover, controlling the winding mechanism and the driving mechanism to rotate with different torques can make the electrode sheet roll subject to greater tension, which is beneficial for making the electrode sheet roll wound more neatly and regularly; and can make the cut electrode sheet and the electrode sheet to be processed subject to less tension, which can reduce the risk of breakage of the cut electrode sheet and the electrode sheet to be processed.

### DESCRIPTION OF DRAWINGS

Various other advantages and benefits will become clear to those skilled in the art through reading the detailed description of the preferred embodiments below. The accompanying drawings are only for the purpose of illustrating preferred embodiments and are not considered to limit this disclosure. Moreover, in all the drawings, the same reference signs denote the same components. In the drawings:
FIG. 1 is a first schematic diagram of a composition structure of an electrode sheet processing device according to this disclosure;
FIG. 2 is a second schematic diagram of a composition structure of an electrode sheet processing device according to this disclosure;
FIG. 3 is a first schematic diagram of a structure of an air knife mechanism according to this disclosure;
FIG. 4 is a second schematic diagram of a structure of an air knife mechanism according to this disclosure;
FIG. 5 is a third schematic diagram of a structure of an air knife mechanism according to this disclosure;
FIG. 6 is a first schematic diagram of a structure of a slitting mechanism according to this disclosure;
FIG. 7 is a schematic cross-sectional view along the direction A-A in FIG. 6 according to this disclosure;
FIG. 8 is a schematic cross-sectional view along direction B-B in FIG. 6 according to this disclosure;
FIG. 9 is a second schematic diagram of a structure of a slitting mechanism according to this disclosure;
FIG. 10 is a first schematic diagram of a structure of an electrode sheet roll according to this disclosure;
FIG. 11 is a second schematic diagram of a structure of an electrode sheet roll according to this disclosure;
FIG. 12 is a schematic diagram of a structure of a shaping member according to this disclosure;
FIG. 13 is a first schematic flowchart of a control method for electrode sheet processing device according to this disclosure;
FIG. 14 is a second schematic flowchart of a control method for electrode sheet processing device according to this disclosure;
FIG. 15 is a third schematic flowchart of a control method for electrode sheet processing device according to this disclosure; and
FIG. 16 is a fourth schematic flowchart of a control method for electrode sheet processing device according to this disclosure.

### Reference signs description:

1-unwinding mechanism; 11-first unwinding assembly; 12-second unwinding assembly; 13-unwinding roll-changing assembly; 14-connecting assembly; 15-unwinding detection member; 2-tab forming mechanism; 3-scrap removal mechanism; 31-air knife mechanism; 311-air knife bracket; 312-air knife roller shaft; 313-air knife body; 314-guide member; 315-contour cover; 316-negative pressure pipeline; 32-compression mechanism; 33-cleaning mechanism; 331-dust removal assembly; 332-suction assembly; 4-slitting mechanism; 41-first support base; 42-second support base; 43-first knife shaft; 44-second knife shaft; 45-slitting knife; 46-adjustment assembly; 461-adjustment member; 462-locking member; 463-adjustment and fixing base; 47-slitting positioning assembly; 48-measuring member; 49-slitting base; 40-bushing; 5-winding mechanism; 51-first winding assembly; 52-second winding assembly; 53-winding roll-changing assembly; 54-shaping assembly; 55-shaping detection assembly; 56-pressing assembly; 6-web splicing mechanism; 7-reinforcement mechanism; 81-first driving mechanism; 82-second driving mechanism; 91-first detection assembly; 92-second detection assembly; 93-third detection assembly; 94-first marking assembly; 95-separator; 01-electrode sheet to be processed; 02-cut electrode sheet; 03-slit electrode sheet; 04-electrode sheet roll; 05-shaping member; C-extension path; D-axial direction; E-radial direction; F-first side; and G-second side.

### DETAILED DESCRIPTION

Hereinafter, embodiments of the technical solution of this disclosure will be described in detail with reference to the accompanying drawings. The following embodiments are only used to more clearly illustrate the technical solution of this disclosure, and therefore are only examples, and should not be used to limit the scope of protection of this disclosure.

Unless otherwise defined, all technical and scientific terms used herein have the same meaning as commonly understood by one of ordinary skill in the art to which this disclosure belongs; the terms used herein are for the purpose of describing particular embodiments only and are not intended to limit this disclosure; the terms "comprise" and "have" and any variations thereof in the specification and the above description of the drawings are intended to cover non-exclusive inclusion.

In the description of the embodiments of this disclosure, the technical terms "first", "second", "third", and the like are only used to distinguish different objects, and should not be understood as indicating or implying relative importance or implicitly indicating the quantity, specific order, or primary-secondary relationship of the indicated technical features. In the description of the embodiments of this disclosure, "multiple" means two or more, unless otherwise clearly and specifically defined.

Reference to "embodiment" herein means that a particular feature, structure, or characteristic described in connection with the embodiment may be included in at least one embodiment of this disclosure. The appearance of the phrase in various places in the specification does not necessarily all refer to the same embodiment, nor are they independent or alternative embodiments mutually exclusive of other embodiments. Those skilled in the art explicitly and implicitly understand that the embodiments described herein may be combined with other embodiments.

In the description of the embodiments of this disclosure, unless otherwise expressly specified and defined, the term "and/or" is merely an associative relationship describing associated objects, indicating that there can be three relationships. For example, A and/or B can mean: A exists alone, A and B exist simultaneously, or B exists alone. In addition, the character "/", as used herein, generally indicates an "or" relationship between the associated objects before and after it.

In the description of the embodiments of this disclosure, the technical terms "length", "width", "thickness", "upper", "lower", "front", "rear", "left", "right", "vertical", "horizontal", "top", "bottom", "inner", "outer", "circumferential", and the like indicating orientation or positional relationships are based on the orientation or positional relationships shown in the accompanying drawings, and are only for the convenience of describing the embodiments of this disclosure and simplifying the description, and are not intended to indicate or imply that the device or element referred to must have a specific orientation, be constructed, operated, or used in a specific orientation, and therefore should not be understood as a limitation on the embodiments of this disclosure.

In the description of the embodiments of this disclosure, unless otherwise clearly specified and defined, the technical terms "mounting", "connection", "linkage", "attachment", and the like should be understood in a broad sense. For example, it may be a fixed connection, or a detachable connection, or integrated; it may alternatively be a mechanical connection, or an electrical connection; it may be directly connected, or indirectly connected through an intermediate medium, or it may be a communication within two elements or an interaction relationship between two elements. For those skilled in the art, the specific meaning of the above terms in the embodiments of this disclosure can be understood according to specific circumstances.

In the description of the embodiments of this disclosure, unless otherwise clearly specified and defined, the technical term "contact" should be understood in a broad sense, which can be direct contact, or contact through an intermediate medium layer, or contact where there is essentially no interaction force between the two contacting objects, or contact where there is an interaction force between the two contacting objects.

Hereinafter, this disclosure will be described in detail.

Currently, secondary batteries are being increasingly widely used in daily life and industry. Secondary batteries are not only used in energy storage power systems such as hydropower, thermal power, wind power, and solar power stations, but are also widely used in electric vehicles such as electric bicycles, electric motorcycles, and electric cars, as well as in aerospace and other fields. With the continuous expansion of the application fields of power batteries, their market demand is also continuously increasing.

In the embodiments of the present application, a battery may include one or more battery cells, and multiple battery cells are connected in series, parallel, or mixed connection through busbar components. A battery cell (hereinafter also referred to as "cell") may be a secondary battery, where the secondary battery means a battery cell that can continue to be used after discharge by charging to activate the active material.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, and the like. The embodiments of the present application are not limited thereto.

A battery cell generally includes an electrode assembly. The electrode assembly includes a positive electrode, a negative electrode, and a separator, with the separator disposed between the negative electrode and the positive electrode. During the charging and discharging of the battery cell, active ions (such as lithium ions) intercalate and deintercalate between the positive electrode and the negative electrode. The separator is disposed between the positive electrode and the negative electrode, which can prevent short circuits between the positive and negative electrodes, and can also allow active ions to pass through.

The electrode assembly may be a wound structure, or may be a stacked structure, or may be a hybrid structure of winding and stacking.

In some embodiments, the electrode assembly is a wound structure. A positive electrode sheet and a negative electrode sheet are wound into a wound structure.

In some embodiments, the electrode assembly is provided with a tab, and the tab can conduct current out of the electrode assembly. The tab includes a positive tab and a negative tab.

During the production of secondary batteries, the electrode sheets used to manufacture battery cells need to undergo multiple processing steps, including die-cutting and slitting. In the related art, the equipment for die-cutting and slitting electrode sheets is set as independent equipment, and the die-cutting and slitting processes are carried out independently. Although this facilitates the design of die-cutting and slitting equipment, multiple pieces of equipment, increase investment costs, and also require more production space, which also increases production costs. In addition, transferring semi-finished products to be processed between multiple pieces of equipment also reduces the production efficiency of batteries. Therefore, there is a need for an electrode sheet processing device that can improve the production efficiency of electrode sheets and an also improve the qualification rate of electrode sheet processing while reducing the floor area.

An embodiment of this disclosure provides an electrode sheet processing device, where the electrode sheet processing device is configured to process an electrode sheet to be processed for manufacturing battery cells in the battery. The electrode sheet to be processed may be a thin sheet structure including a current collector and an active material disposed on at least one surface in a thickness direction of the current collector. Through this electrode sheet processing device, the electrode sheet to be processed can be subjected to different cutting and slitting operations to form an electrode sheet for manufacturing battery cells. For example, a larger and longer strip-shaped electrode sheet to be processed can have tabs cut on two sides, and then the cut electrode sheet with two rows of tabs can be slit into two strip-shaped electrode sheets that can be used to manufacture battery cells. The electrode sheet processing device can also wind the processed strip-shaped electrode sheet to form an electrode sheet roll, so as to facilitate the transportation and storage of the strip-shaped electrode sheet.

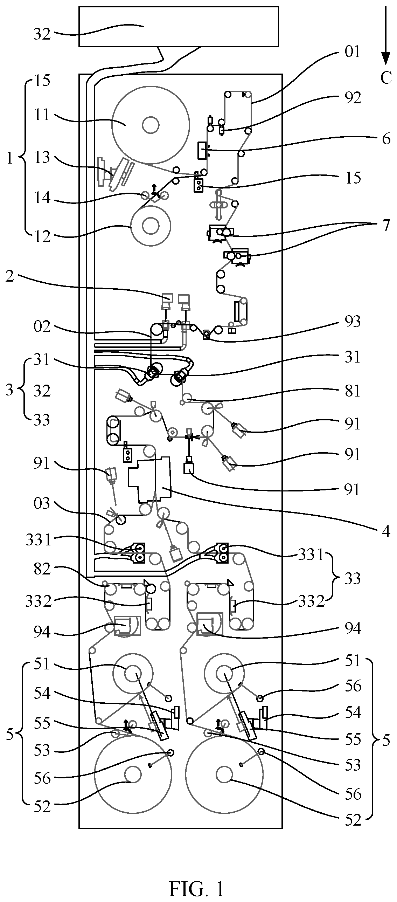

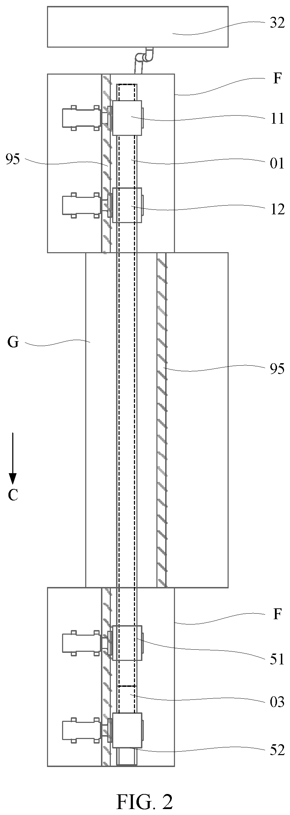

An embodiment of this disclosure provides an electrode sheet processing device. Referring to FIG. 1 and FIG. 2, FIG. 1 is a first schematic diagram of a composition structure of the electrode sheet processing device according to this disclosure, and FIG. 2 is a second schematic diagram of a composition structure of the electrode sheet processing device according to this disclosure. As shown in FIG. 1 and FIG. 2, the electrode sheet processing device includes an unwinding mechanism 1, a tab forming mechanism 2, a scrap removal mechanism 3, and a slitting mechanism 4; where the unwinding mechanism 1 is configured to carry a wound electrode sheet to be processed 01; the tab forming mechanism 2 is disposed on an extension path C of the electrode sheet to be processed 01 and is configured to cut the electrode sheet to be processed 01; the scrap removal mechanism 3 is disposed on an extension path C of the cut electrode sheet 02 and is located on a side of the tab forming mechanism 2 away from the unwinding mechanism 1, and the scrap removal mechanism 3 is configured to remove waste material formed after the electrode sheet to be processed 01 is cut; and along the extension path C of the cut electrode sheet 02, the slitting mechanism 4 is disposed on a side of the scrap removal mechanism 3 away from the tab forming mechanism 2, and the slitting mechanism 4 is configured to slit the cut electrode sheet 02.

In this embodiment of this disclosure, the electrode sheet to be processed 01 processed by the electrode sheet processing device may be an electrode sheet including a current collector and an active material, with the active material applied on a surface of the current collector. The current collector may be a metal foil or a composite current collector. In order to improve the production efficiency of electrode sheets, the electrode sheet to be processed 01 is usually configured as a structure including at least two current collectors. During the processing of the electrode sheet to be processed 01, the electrode sheet to be processed 01 is slit into at least two parts to form at least two slit electrode sheets 03. Before slitting the electrode sheet to be processed 01, multiple tabs can be cut on both sides of the electrode sheet to be processed 01.

In this embodiment of this disclosure, before processing the electrode sheet to be processed 01, the electrode sheet to be processed 01 wound into a roll needs to be placed on the unwinding mechanism 1, so that the unwinding mechanism 1 carries the electrode sheet to be processed 01. The roll of the electrode sheet to be processed 01 can be unfolded into a strip-shaped electrode sheet to be processed 01 on the unwinding mechanism 1.

In this embodiment of this disclosure, in order to cut and form multiple tabs on the electrode sheet to be processed 01, a tab forming mechanism 2 can be disposed along the extension path C of the strip-shaped electrode sheet to be processed 01, so as to cut the electrode sheet to be processed 01 through the tab forming mechanism 2.

Illustratively, the tab forming mechanism 2 can be configured as a structure include at least two laser cutters. By using high-power density laser beams emitted by the laser cutters to irradiate the electrode sheet to be processed 01, the electrode sheet to be processed 01 is rapidly heated to the vaporization temperature and evaporates to form holes. As the laser beam moves the electrode sheet to be processed 01, the holes continuously form a narrower cutting seam, completing the cutting of the electrode sheet to be processed 01. For example, two laser cutters can be respectively disposed on two sides of the electrode sheet to be processed 01, so that the two laser cutters cut the edge portions on the two sides of the electrode sheet to be processed 01, thereby forming two rows of tabs on the electrode sheet to be processed 01 to obtain the cut electrode sheet 02. Moreover, during the process of cutting the electrode sheet to be processed 01 by the tab forming mechanism 2, the cut waste material needs to be removed to separate the waste material from the cut electrode sheet 02.

In this embodiment of this disclosure, in some cases, the tab forming mechanism 2 may fail to completely cut off the waste material from the cut electrode sheet 02. In this case, the cut electrode sheet 02 will carry the uncut waste material to the next processing station. If the adhering waste material is not separated from the cut electrode sheet 02 in time, there is a risk of the waste material scratching the tabs, causing deformation of the tabs or breakage of the cut electrode sheet 02.

Illustratively, along the extension path C of the cut electrode sheet 02, a scrap removal mechanism 3 can be disposed on a side of the tab forming mechanism 2 away from the unwinding mechanism 1, so as to timely remove the waste material adhering to the cut electrode sheet 02 through the scrap removal mechanism 3. For example, the scrap removal mechanism 3 can be configured as a structure capable of blowing a high-velocity airflow towards the tabs on the cut electrode sheet 02, so as to blow the waste material away from the cut electrode sheet 02 by the high-velocity airflow.

In this embodiment of this disclosure, after the electrode sheet to be processed 01 is cut, two rows of tabs are formed on two sides of the cut electrode sheet 02, so the cut electrode sheet 02 needs to be slit to divide the cut electrode sheet 02 from the middle into two slit electrode sheets 03. A slitting mechanism 4 can be disposed along the extension path C of the cut electrode sheet 02, with the slitting mechanism 4 disposed on a side of the scrap removal mechanism 3 away from the tab forming mechanism 2. In this way, the cut electrode sheet 02 entering the slitting mechanism 4 will not have waste material adhering to it.

The electrode sheet processing device according to this embodiment of this disclosure, due to the provision of an unwinding mechanism 1, can carry a wound electrode sheet to be processed 01 in the form of a roll through the unwinding mechanism 1, or can unfold the wound electrode sheet to be processed 01 in the form of a roll into a strip-shaped electrode sheet to be processed 01 through the unwinding mechanism 1. Moreover, a tab forming mechanism 2 is disposed along the extension path C of the electrode sheet to be processed 01, so that the electrode sheet to be processed 01 can be cut through the tab forming mechanism 2 to form a tab on the electrode sheet to be processed 01. Furthermore, a scrap removal mechanism 3 is disposed on an extension path C of a cut electrode sheet 02, so that the waste material adhering to the cut electrode sheet 02 can be forcibly separated through the scrap removal mechanism 3, so as to reduce the risk of the waste material moving with the cut electrode sheet 02, causing deformation of the tab, or causing breakage of the cut electrode sheet 02. Additionally, a slitting mechanism 4 is further disposed on the extension path C of the cut electrode sheet 02, so that the cut electrode sheet 02 can be slit through the slitting mechanism 4, the cut electrode sheet 02 being slit into at least two slit electrode sheets 03.

Compared with the related art, the embodiments of this disclosure sequentially provide a tab forming mechanism 2 and a slitting mechanism 4 along the extension path C of the electrode sheet to be processed 01, which can sequentially cut and slit the electrode sheet to be processed 01, separately. This allows for continuous cutting and slitting of the electrode sheet to be processed 01 in one device, thereby improving the production efficiency of electrode sheet processing, while also reducing the space occupied by the electrode sheet processing device. Moreover, a scrap removal mechanism 3 is disposed between the tab forming mechanism 2 and the slitting mechanism 4, which forcibly separates the adhering waste material through the scrap removal mechanism 3, thereby reducing the adverse effects of waste material on the cut electrode sheet 02, and thus improving the qualification rate of electrode sheet processing.

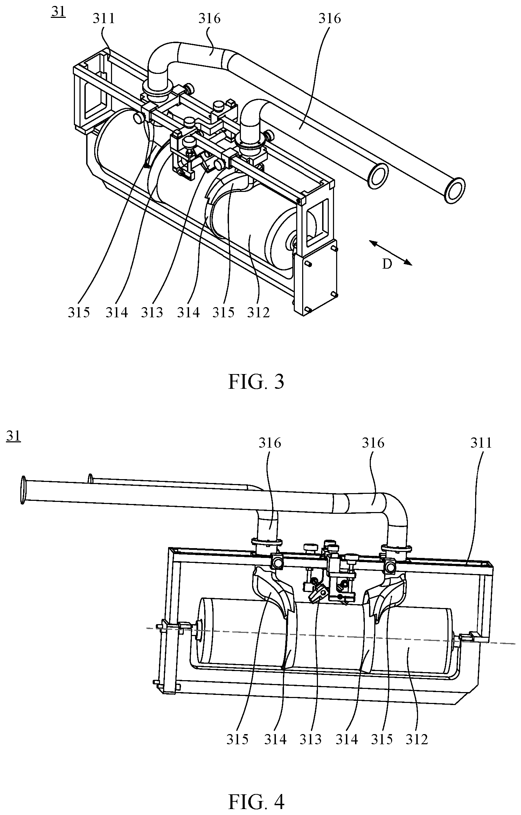

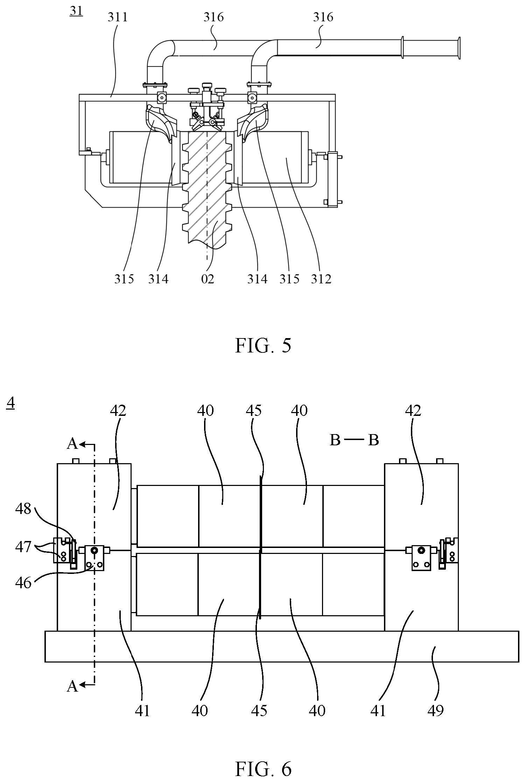

In some embodiments, referring to FIG. 3, FIG. 4, and FIG. 5, FIG. 3 is a first schematic diagram of a structure of an air knife mechanism according to this disclosure, FIG. 4 is a second schematic diagram of a structure of an air knife mechanism according to this disclosure, and FIG. 5 is a third schematic diagram of a structure of an air knife mechanism according to this disclosure. The scrap removal mechanism 3 can be configured as a structure including an air knife mechanism 31. As shown in FIG. 3, FIG. 4, and FIG. 5, the air knife mechanism 31 includes an air knife bracket 311, an air knife roller shaft 312, and an air knife body 313; where the air knife roller shaft 312 is rotatably mounted on the air knife bracket 311, the cut electrode sheet 02 moves in contact with the air knife roller shaft 312, the air knife body 313 is mounted on the air knife bracket 311, the air knife body 313 has an air outlet and an air inlet that are connected, and along an axial direction D of the air knife roller shaft 312, the air outlet is directed from a center of the cut electrode sheet 02 towards a tab on the cut electrode sheet 02, and the air inlet is configured to be connected to an air source.

The air knife bracket 311 in this embodiment of this disclosure is configured to carry and mount other components in the air knife mechanism 31, and the air knife mechanism 31 can be fixedly mounted at the electrode sheet processing station through the air knife bracket 311. For example, the air knife bracket 311 can be configured as a frame structure, or a box structure, and so on.

In this embodiment of this disclosure, an air knife roller shaft 312 can be provided on the air knife bracket 311. The air knife roller shaft 312 can be rotatably disposed on the air knife bracket 311, and the axis of the air knife roller shaft 312 can be perpendicular or nearly perpendicular to the extension path C of the cut electrode sheet 02. For example, the air knife roller shaft 312 can be configured as a cylindrical structure. During the movement of the cut electrode sheet 02 in contact with the surface of the air knife roller shaft 312, the air knife roller shaft 312 rotates with the cut electrode sheet 02. Alternatively, a driving member can be provided for the air knife roller shaft 312, so that the driving member drives the air knife roller shaft 312 to rotate autonomously.

The air knife body 313 in this embodiment of this disclosure is configured to control the direction of the airflow blown towards the cut electrode sheet 02, and the air knife body 313 can be mounted on the air knife bracket 311. An air outlet is provided at one end of the air knife body 313, and the air outlet can be a long strip-shaped opening. An air inlet is provided at another end of the air knife body 313, and the air inlet is connected to the air outlet. The air inlet can adopt a connector to connect the air knife body 313 to an air source through the air inlet. During the installation of the air knife body 313, along the axial direction D of the air knife roller shaft 312, the air outlet can face the tab on the cut electrode sheet 02 from the center of the cut electrode sheet 02. For example, at least two air knife bodies 313 can be mounted on the air knife bracket 311, and the two air knife bodies 313 respectively face two sides of the cut electrode sheet 02, so that the two air knife bodies 313 clean waste material from the two sets of tabs located on the two sides of the cut electrode sheet 02.

In the above embodiment, since an air knife roller shaft 312 is rotatably provided on the air knife bracket 311, during the movement of the cut electrode sheet 02 through the air knife mechanism 31, the cut electrode sheet 02 can be supported by the air knife roller shaft 312, thereby enabling the cut electrode sheet 02 to move stably to the next station along a fixed path around the air knife roller shaft 312. Moreover, an air knife body 313 is provided on the air knife bracket 311, and the air knife body 313 can be connected to a high-pressure air source; and the air outlet of the air knife body 313 is directed from the center of the cut electrode sheet 02 towards the tab of the cut electrode sheet 02, so that the waste material attached to the tab can be blown away from the tab by the airflow, separating the waste material from the tab, thereby reducing the impact of waste material not separated from the tab on the tab.

In some embodiments, as shown in FIG. 3, FIG. 4, and FIG. 5, the air knife mechanism 31 can further include structural components such as a guide member 314, a contour cover 315, and a negative pressure pipeline 316; where the guide member 314 is sleeved on the air knife roller shaft 312 along a radial direction E of the air knife roller shaft 312, and is located on a side of the tab on the air knife roller shaft 312 away from the air outlet; the contour cover 315 is mounted on the air knife bracket 311 and is positioned opposite the guide member 314; and the contour cover 315 has a suction inlet and a discharge outlet, where a shape of the suction inlet is adapted to a shape of the guide member 314, the suction inlet is located on a flow path of the airflow blown out from the air outlet, and the discharge outlet is connected to one end of the negative pressure pipeline 316.

In these embodiments of this disclosure, a guide member 314 can be provided on the air knife roller shaft 312 to guide the flow direction of the airflow blown out from the air outlet of the air knife body 313 through the guide member 314. For example, the guide member 314 can be configured as a conical tube, and the conical tube is sleeved on the air knife roller shaft 312. The conical tube is located on the side of the tab on the air knife roller shaft 312 away from the air outlet of the air knife body 313; and the end of the conical tube with a larger diameter is located further away from the air knife body 313 than the end with a smaller diameter. The diameter of the end of the conical tube with a smaller diameter is adapted to an outer diameter of the air knife roller shaft 312, and the conical tube can be connected to the air knife roller shaft 312 by interference fit.

In these embodiments of this disclosure, a contour cover 315 can further be provided on the air knife bracket 311. A suction inlet can be provided at one end of the contour cover 315, and the suction inlet can be configured as an arc-shaped opening. A size of the arc-shaped opening is adapted to that of the conical guide member 314, so that the suction inlet is adjacent to the end of the guide member 314 away from the air knife body 313. Moreover, the suction inlet is located on the flow path of the airflow blown out from the air outlet on the air knife body 313. A discharge outlet can be provided at another end of the contour cover 315. In this way, the waste material blown away from the tab by the airflow can enter the contour cover 315.

In these embodiments of this disclosure, a negative pressure pipeline 316 can further be provided in the air knife mechanism 31. The negative pressure pipeline 316 can be configured as a structure including an air flow pipe and a negative pressure pump; where the negative pressure pump is connected to the air flow pipe, the negative pressure pump can generate negative pressure in the air flow pipe; and one end of the air flow pipe is connected to the discharge outlet of the contour cover 315, so as to connect the negative pressure pipeline 316 to the discharge outlet of the contour cover 315.

In the above embodiment, since a guide member 314 is provided on the air knife roller shaft 312 of the air knife mechanism 31, the movement path of the waste material blown away from the tab by the airflow can be guided by the guide member 314. Moreover, a contour cover 315 adjacent to the guide member 314 is provided, which allows the waste material passing through the guide member 314 to enter the contour cover 315, so that the waste material can be collected by the contour cover 315. Furthermore, a negative pressure pipeline 316 is connected to the discharge outlet of the contour cover 315, so that negative pressure can be generated at the suction inlet of the contour cover 315 through the negative pressure pipeline 316, which is beneficial for the waste material to enter the contour cover 315. Additionally, the waste material entering the contour cover 315 can be transported to a storage location through the negative pressure pipeline 316.

In some embodiments, as shown in FIG. 1, a compression assembly can further be provided in the scrap removal mechanism 3, the compression assembly is connected to an end of the negative pressure pipeline 316 away from the contour cover 315, and the compression assembly is configured to compress and accommodate the waste material.

In these embodiments of this disclosure, in order to facilitate the collection and temporary storage of waste material collected by the air knife mechanism 31, a compression assembly can be provided in the electrode sheet processing device, and the compression assembly is connected to the end of the negative pressure pipeline 316 in the air knife mechanism 31 away from the contour cover 315.

Illustratively, the compression assembly can be configured as a structure including a box, a compression member, and a driving member. The box has an accommodation chamber and a compression channel; the compression member is movably disposed in the compression channel, and the driving member is connected to the compression member, and the driving member can drive the compression member to move in the compression channel to compress the waste material entering the compression channel. The compressed waste material can enter the accommodation chamber.

In the above embodiment, since a compression assembly is provided in the scrap removal mechanism 3 and the compression assembly is connected to the negative pressure pipeline 316 of the air knife mechanism 31, the waste material transported through the negative pressure pipeline 316 can enter the compression assembly; and the waste material can be compressed by the compression assembly to reduce the space occupied by the waste material. This helps store the waste material and can increase the accommodation capacity of the compression assembly for the waste material.

In some embodiments, as shown in FIG. 1, a first detection assembly 91 can further be provided in the electrode sheet processing device; along the extension path C of the cut electrode sheet 02, the first detection assembly 91 is disposed on a side of the air knife mechanism 31 away from the tab forming mechanism 2, and the first detection assembly 91 is configured to acquire image data of the cut electrode sheet 02, where the image data includes waste zone information of the cut electrode sheet 02.

In these embodiments of this disclosure, in order to know whether the processing quality of the cut electrode sheet 02 meets the design requirements, a first detection assembly 91 can be provided at the rear end of the air knife mechanism 31, so as to acquire image data of the cut electrode sheet 02 through the first detection assembly 91. By analyzing the image data of the cut electrode sheet 02, it can be determined whether the appearance and structural shape of various parts on the cut electrode sheet 02 meet the design requirements.

Illustratively, the first detection assembly 91 can be configured as a structure including a charge coupled device (charge coupled device, CCD) camera, where the CCD camera can be used to photograph the cut electrode sheet 02 to acquire an image of the cut electrode sheet 02.

Another example is that multiple CCD cameras may be arranged along the extension path C of the cut electrode sheet 02. For instance, one CCD camera can be disposed for each column of tabs formed on the cut electrode sheet 02 to acquire images of each column of tabs. Alternatively, CCD cameras may be placed at the edge positions of the active material on the cut electrode sheet 02 to capture images of the edge portions of the active material. Alternatively, CCD cameras may be positioned on both the front and back sides of the cut electrode sheet 02 to obtain images of the front and back sides of the cut electrode sheet 02. By analyzing the images of different parts of the cut electrode sheet 02, it can be determined whether the quality of the cut electrode sheet 02 meets the design requirements. If quality defects are identified in certain parts of the cut electrode sheet 02 through image analysis, a waste zone can be recorded based on the acquired image data. The waste zone information includes position information of the waste zone of the cut electrode sheet 02 on the cut electrode sheet 02.

In the above embodiment, since a first detection assembly 91 is further provided along the extension path C of the cut electrode sheet 02, image data of the cut electrode sheet 02 cleaned by the air knife mechanism 31 can be acquired through the first detection assembly 91, thereby allowing for determining whether the processing quality of the cut electrode sheet 02 is qualified based on the acquired image data.

In some embodiments, as shown in FIG. 1, the electrode sheet processing device further includes a first marking assembly 94, where along the extension path C of the cut electrode sheet 02, the first marking assembly 94 is disposed on a side of the first detection assembly 91 away from the air knife mechanism 31, the first detection assembly 91 is electrically connected to the first marking assembly 94, the first detection assembly 91 is further configured to send a marking instruction to the first marking assembly 94 based on waste zone information, and the marking instruction is used to control the first marking assembly 94 to mark the waste zone on the cut electrode sheet 02.

In these embodiments of this disclosure, if the first detection assembly 91 detects a waste zone on the cut electrode sheet 02, this waste zone can be marked.

Illustratively, a first marking assembly 94 can be disposed at a position adjacent to the first detection assembly 91 along the extension path C of the cut electrode sheet 02, and the first marking assembly 94 is electrically connected to the first detection assembly 91. For example, the first marking assembly 94 can be configured to move relative to the first detection assembly 91 and include a structure capable of making marks on the cut electrode sheet 02. In this way, if the first detection assembly 91 detects a waste zone on the cut electrode sheet 02, a marking instruction can be sent to the first marking assembly 94 based on the waste zone information. The first marking assembly 94 responds to the marking instruction by moving relative to the cut electrode sheet 02 and making marks on the waste zone on the cut electrode sheet 02.

In the above embodiment, since a first marking assembly 94 electrically connected to the first detection assembly 91 is provided in the electrode sheet processing device, the first marking assembly 94 can mark the waste zone on the cut electrode sheet 02, thereby facilitating the processing of the cut electrode sheet 02 containing the waste zone in subsequent processing steps, and thus reducing the risk of unqualified cut electrode sheets 02 being used to manufacture battery cells.

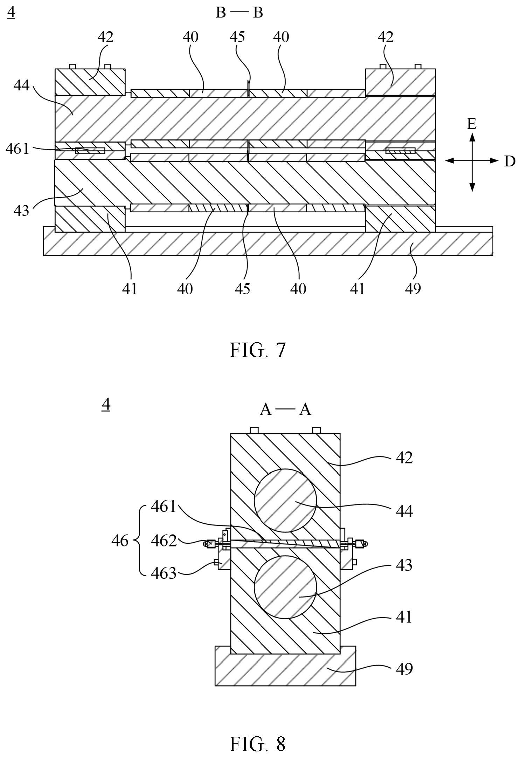

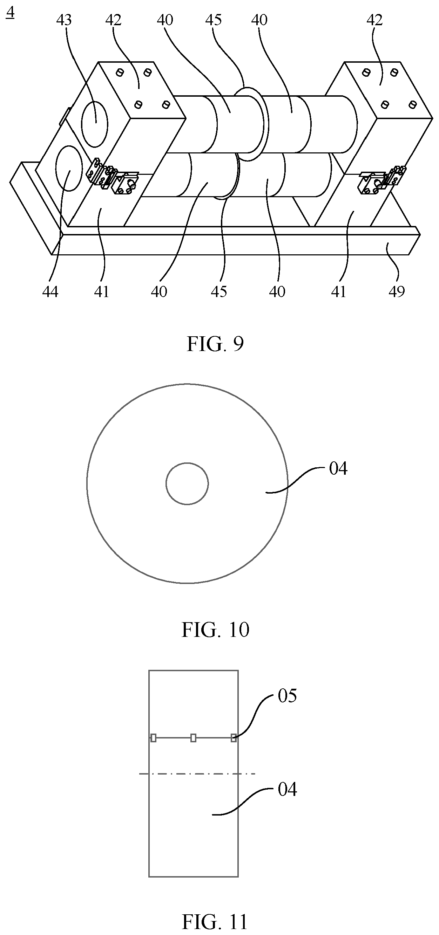

In some embodiments, referring to FIG. 6, FIG. 7, FIG. 8, and FIG. 9, FIG. 6 is a first schematic diagram of a structure of a slitting mechanism 4 according to this disclosure, FIG. 7 is a schematic cross-sectional view along direction A-A in FIG. 6 according to this disclosure, FIG. 8 is a schematic cross-sectional view along direction B-B in FIG. 6 according to this disclosure, and FIG. 9 is a second schematic diagram of a structure of a slitting mechanism 4 according to this disclosure. The slitting mechanism 4 includes a first support base 41, a second support base 42, a first knife shaft 43, a second knife shaft 44, a slitting knife 45, and an adjustment assembly 46; where along a radial direction E of the first knife shaft 43, the first support base 41 and the second support base 42 are connected; the first knife shaft 43 is rotatably disposed on the first support base 41, the second knife shaft 44 is rotatably disposed on the second support base 42, and the first knife shaft 43 and the second knife shaft 44 are disposed in the same axial direction; the corresponding slitting knives 45 are respectively disposed on the first knife shaft 43 and the second knife shaft 44; the adjustment assembly 46 is disposed between the first support base 41 and the second support base 42, and along the radial direction E of the first knife shaft 43, the adjustment assembly 46 is configured to adjust a distance between the first support base 41 and the second support base 42.

In these embodiments of this disclosure, a first support base 41 and a second support base 42 can be provided in the slitting mechanism 4, so as to carry and mount two knife shafts through the first support base 41 and the second support base 42. Along the radial direction E of the first knife shaft 43, the first support base 41 and the second support base 42 are connected.

Illustratively, two first support bases 41 and two second support bases 42 can be provided. One first support base 41 and one second support base 42 are connected as a set, and the other first support base 41 and the other second support base 42 are connected as a set. Two ends of the first knife shaft 43 are rotatably mounted on the two first support bases 41, respectively, and two ends of the second knife shaft 44 are rotatably mounted on the two second support bases 42, respectively. Moreover, the axial direction of the first knife shaft 43 and the axial direction of the second knife shaft 44 are consistent, in other words, the two knife shafts are disposed in parallel.

In another example, bushings 40 can be sleeved on the first knife shaft 43 and the second knife shaft 44, respectively, and an outer diameter of the bushing 40 is smaller than an outer diameter of the slitting knife 45. Along the axial direction D of the first knife shaft 43, the slitting knife 45 can be clamped and fixed on the first knife shaft 43 and the second knife shaft 44, respectively, through the bushings 40.

In yet another example, to facilitate the mounting of the two sets of support bases, a slitting base 49 can be provided in the slitting mechanism 4. One first support base 41 is fixedly mounted relative to the slitting base 49, and along the axial direction D of the first knife shaft 43, the other first support base 41 is arranged to be movably connected to the slitting base 49.

In yet another example, to facilitate the adjustment of the distance between the first knife shaft 43 and the second knife shaft 44, an adjustment assembly 46 can be provided between the first support base 41 and the second support base 42. In this way, along the radial direction E of the first knife shaft 43, a distance between the first support base 41 and the second support base 42 can be adjusted through the adjustment assembly 46.

In the above embodiment, since a first support base 41 and a second support base 42 are provided in the slitting mechanism 4, the first knife shaft 43 and the second knife shaft 44 can be respectively mounted on the first support base 41 and the second support base 42, which facilitates the mounting of the two knife shafts. Moreover, an adjustment assembly 46 is provided between the first support base 41 and the second support base 42, so that the distance between the first support base 41 and the second support base 42 can be adjusted through the adjustment assembly 46, thereby adjusting the distance between the first knife shaft 43 and the second knife shaft 44. In this way, even if slitting knives 45 of different diameters are mounted on the first knife shaft 43 and the second knife shaft 44, the adjustment assembly 46 can be used to adjust the two slitting knives 45 to make the two slitting knives 45 align with each other, thereby improving the applicability of the slitting mechanism 4.

In some embodiments, as shown in FIG. 8, the adjustment assembly 46 can be configured as a structure including an adjustment member 461 and a locking member 462; where the adjustment member 461 is slidably disposed between the first support base 41 and the second support base 42, the locking member 462 is mounted on the first support base 41 or the second support base 42, the locking member 462 abuts against the adjustment member 461, and during the movement of the locking member 462 relative to the first support base 41 in a direction approaching or moving away from the adjustment member 461, the locking member 462 can drive the adjustment member 461 to move relative to the first support base 41, so as to adjust a distance between the first support base 41 and the second support base 42.

In these embodiments of this disclosure, to facilitate the adjustment of the adjustment assembly 46, an abutting adjustment member 461 and a locking member 462 can be provided in the adjustment assembly 46.

Illustratively, the adjustment member 461 can be configured as a wedge block. Two wedge blocks can be provided in the adjustment assembly 46, and the two wedge blocks are slidably abutted in a centrally symmetrical manner. The two wedge blocks are slidably mounted between the first support base 41 and the second support base 42, and the first support base 41 and the second support base 42 abut against each other through the two wedge blocks. In this way, during the relative sliding of the two wedge blocks, the combined thickness of the two wedge blocks will change, which can drive the first support base 41 and the second support base 42 to move relative to each other along the radial direction E of the first knife shaft 43.

In another example, the locking member 462 can be mounted on the first support base 41 or the second support base 42. For example, the locking member 462 can be a bolt, and an end of the bolt abuts against the adjustment member 461. In this way, by screwing the bolt, the bolt can drive the adjustment member 461 to move relative to the first support base 41. For example, when the screw moves towards the wedge block, the wedge blocks can move closer to each other, and the combined thickness of the two wedge blocks will increase, which can increase the distance between the two knife shafts. When the screw moves away from the wedge block, the wedge blocks can move away from each other, and the combined thickness of the two wedge blocks will decrease, which can decrease the distance between the two knife shafts.

In yet another example, to facilitate the mounting of the locking member 462, an adjustment and fixing base 463 can be fixedly mounted on the first support base 41 or the second support base 42. A threaded hole adapted to the bolt is provided on the adjustment and fixing base 463 to mount the bolt on the adjustment and fixing base 463.

In the above embodiment, since the adjustment member 461 is slidably disposed between the first support base 41 and the second support base 42, the adjustment member 461 can move relative to the first support base 41 to change the distance between the first support base 41 and the second support base 42. Moreover, the locking member 462 is mounted on the first support base 41 or the second support base 42, and the locking member 462 can drive the adjustment member 461 to move, so as to facilitate the movement of the adjustment member 461 relative to the first support base 41; and after the distance between the first support base 41 and the second support base 42 is adjusted, the locking member 462 can also fix the adjustment member 461 relative to the first support base 41 so that it cannot move freely, thereby keeping the distance between the first support base 41 and the second support base 42 constant.

In some embodiments, as shown in FIG. 6 and FIG. 9, the slitting mechanism 4 further includes a slitting positioning assembly 47, where the slitting positioning assembly 47 is mounted on the first support base 41 and/or the second support base 42, and the slitting positioning assembly 47 is configured to limit the position of the second support base 42 relative to the first support base 41.

In these embodiments of this disclosure, after the first support base 41 and the second support base 42 are connected, in order to keep the relative positions of the first support base 41 and the second support base 42 unchanged, the slitting positioning assembly 47 can be mounted on each of the first support base 41 and the second support base 42, or the slitting positioning assembly 47 can be mounted on either the first support base 41 or the second support base 42, to position the first support base 41 and the second support base 42.

Illustratively, the slitting positioning assembly 47 can be configured as a structure including a radial positioning member and an axial positioning member. Along the direction perpendicular to a line connecting the first support base 41 to the second support base 42, a radial positioning member can be mounted on the first side wall of the first support base 41, and the radial positioning member extends to a side wall position of the second support base 42. The radial positioning member can limit the movement of the second support base 42 relative to the first support base 41 in the direction perpendicular to the line connecting the first support base 41 to the second support base 42. For example, the radial positioning member can be configured as a radial positioning block.

In another example, a sliding groove can further be provided on the radial positioning member, and the sliding groove extends from the side wall of the radial positioning member, and extends along the direction from the first support base 41 to the second support base 42. A sliding post adapted to the sliding groove can be provided on the second support base 42. During the assembly of the first support base 41 and the second support base 42, the sliding post is engaged in the sliding groove, which can improve the accuracy of positioning the first support base 41 and the second support base 42.

In yet another example, along the axial direction D of the first knife shaft 43, an axial positioning member can be mounted on the second side wall of the first support base 41, and the axial positioning member extends to the side wall position of the second support base 42. For example, the axial positioning member can be an axial positioning block. In this way, the axial positioning member can limit the movement of the second support base 42 relative to the first support base 41 in the axial direction D of the first knife shaft 43.

It should be noted that the axial positioning member and the radial positioning member may alternatively be mounted on the second support base 42 and extend to the side wall of the first support base 41. The embodiments of this disclosure do not limit the specific mounting positions of the axial positioning member and the radial positioning member.

In the above embodiment, since a slitting positioning assembly 47 is mounted on the first support base 41 and/or the second support base 42, the position of the second support base 42 relative to the first support base 41 can be limited by the slitting positioning assembly 47, and specifically, the position of the second support base 42 relative to the first support base 41 in the axial direction D of the first knife shaft 43 can be limited. In this way, the mounting accuracy of the first support base 41 and the second support base 42 can be improved, the risk of unnecessary movement of the second support base 42 relative to the first support base 41 can be reduced, and in turn the mounting accuracy of the slitting knife 45 can be improved.

In some embodiments, as shown in FIG. 6, the slitting mechanism 4 further includes a measuring member 48, where one end of the measuring member 48 is connected to the first support base 41, another end is connected to the second support base 42, and the measuring member 48 is configured to measure a spacing between the first support base 41 and the second support base 42.

In these embodiments of this disclosure, during the process of adjusting the spacing between the first support base 41 and the second support base 42, in order to accurately control the amount of change in the adjusted distance, a measuring member 48 can be provided between the first support base 41 and the second support base 42, so as to provide real-time feedback on the numerical value of the distance between the first support base 41 and the second support base 42 through the measuring member 48.

Illustratively, the measuring member 48 may adopt a digital micrometer. The digital micrometer can be mounted on the first support base 41, and the measuring head of the digital micrometer can be connected to the second support base 42. For example, a digital micrometer can be provided on each of the two sets of the first support base 41 and the second support base 42. The measuring member 48 may alternatively adopt other measuring devices with scale lines capable of measuring length distances, and the embodiments of this disclosure are not limited thereto.

In the above embodiment, since a measuring member 48 is provided between the first support base 41 and the second support base 42, during the process of adjusting the distance between the first support base 41 and the second support base 42, the measuring member 48 can provide real-time feedback on the numerical value of the distance between the first support base 41 and the second support base 42, which facilitates quick and accurate adjustment of the spacing between the first support base 41 and the second support base 42.

In some embodiments, as shown in FIG. 1, the scrap removal mechanism 3 further includes a cleaning mechanism 33, where along the extension path C of the slit electrode sheet 03, the cleaning mechanism 33 is disposed on a side of the slitting mechanism 4 away from the unwinding mechanism 1, the cleaning mechanism 33 is connected to the compression assembly, the cleaning mechanism 33 is configured to remove impurities on the slit electrode sheet 03, and the compression assembly is configured to compress and accommodate the impurities.

In these embodiments of this disclosure, after the cut electrode sheet 02 is slit by the slitting mechanism 4, the resulting slit electrode sheet 03 may contain some dust or magnetic impurities. Therefore, a cleaning mechanism 33 can be disposed at the rear end of the slitting mechanism 4 along the extension path C of the slit electrode sheet 03, so as to remove impurities adhering to the cut electrode sheet 02 through the cleaning mechanism 33.

Illustratively, the cleaning mechanism 33 can be configured as a structure including a brush dust removal assembly 331. The brush dust removal assembly 331 abuts against the cut electrode sheet 02, so that the brush on the brush dust removal assembly 331 sweeps away dust and the like on the cut electrode sheet 02. Moreover, the brush dust removal assembly 331 is connected to the compression assembly via a pipeline. The swept dust and the like can enter the compression assembly through the pipeline, so that the compression assembly collects and accommodates the dust and the like.

In another example, the cleaning mechanism 33 may alternatively be configured as a structure including a magnetic rod dust removal assembly 331. The magnetic rod dust removal assembly 331 is disposed at a position adjacent to the cut electrode sheet 02, so as to adsorb magnetic impurities and magnetically conductive impurities on the cut electrode sheet 02 through the magnetic member on the magnetic rod dust removal assembly 331. Moreover, the magnetic rod dust removal assembly 331 is connected to the compression assembly via a pipeline. The impurities adsorbed from the cut electrode sheet 02 can enter the compression assembly through the pipeline, so that the compression assembly collects and accommodates the magnetic impurities and magnetically conductive impurities.

In the above embodiment, since a cleaning mechanism 33 is disposed at the rear end of the slitting mechanism 4 along the extension path C of the slit electrode sheet 03, the cleaning mechanism 33 can remove impurities adhering to the cut electrode sheet 02, so as to keep the cut electrode sheet 02 clean, thereby improving the quality of the battery cell manufactured by sampling the cut electrode sheet 02.

In some embodiments, as shown in FIG. 1, the electrode sheet processing device further includes a plurality of driving mechanisms, where the plurality of driving mechanisms are disposed on the extension path C of the cut electrode sheet 02, and the driving mechanisms are configured to drive the cut electrode sheet 02 or the slit electrode sheet to move in a direction away from the tab forming mechanism 2.

In these embodiments of this disclosure, the electrode sheet to be processed 01 needs to move sequentially through the various mechanisms in the electrode sheet slitting device. At least two driving mechanisms can be provided in the electrode sheet processing device to drive the electrode sheet to be processed 01 to move along the extension path C of the electrode sheet to be processed 01. At least two driving mechanisms can be provided at the rear end of the tab forming mechanism 2 along the extension path C of the cut electrode sheet 02.

Illustratively, a first driving mechanism 81 can be disposed on a side of the air knife mechanism 31 away from the tab forming mechanism 2. The first driving mechanism 81 can be configured as a structure including a driving roller shaft and a driven roller shaft. The cut electrode sheet 02 passes between the driving roller shaft and the driven roller shaft, and the driven roller shaft presses the cut electrode sheet 02 against the driving roller shaft. The driving roller shaft is drivingly connected to a driving member, and the driving member can drive the driving roller shaft to rotate, so as to drive the cut electrode sheet 02 to move in a direction away from the air knife mechanism 31.

In another example, a second driving mechanism 82 can further be provided on a side of the cleaning mechanism 33 away from the tab forming mechanism 2. The second driving mechanism 82 may alternatively be configured as a structure including a driving roller shaft and a driven roller shaft. The slit electrode sheet 03 passes between the driving roller shaft and the driven roller shaft, and the driving roller shaft can drive the slit electrode sheet 03 to move in a direction away from the slitting mechanism 4.

In the above embodiment, since a plurality of driving mechanisms are disposed along the extension path C of the cut electrode sheet 02, the driving mechanisms can drive the cut electrode sheet 02 or the slit electrode sheet 03 to move, allowing the cut electrode sheet 02 or the slit electrode sheet 03 to reach the position of the next processing mechanism; additionally, by controlling the magnitude of the driving force of two adjacent driving mechanisms, the tension of the cut electrode sheet 02 or the slit electrode sheet 03 located between the two adjacent driving mechanisms can be controlled, thereby improving the stability of the movement path of the continuous electrode sheet to be processed 01, cut electrode sheet 02, and slit electrode sheet 03.

In some embodiments, as shown in FIG. 1, the electrode sheet processing device further includes a winding mechanism 5, where along the extension path C of the slit electrode sheet 03, the winding mechanism 5 is disposed on a side of the slitting mechanism 4 away from the scrap removal mechanism 3, and the winding mechanism 5 is configured to wind the slit electrode sheet 03.

In these embodiments of this disclosure, after the cut electrode sheet 02 is slit by the slitting mechanism 4, at least two slit electrode sheets 03 can be obtained. At this point, the cutting and slitting processes for the electrode sheet to be processed 01 are completed, and the slit electrode sheet 03 needs to be wound and collected.

Illustratively, along the extension path C of the two slit electrode sheets 03, two sets of winding mechanisms 5 are provided, respectively, and the winding mechanism 5 is disposed on a side of the slitting mechanism 4 away from the scrap removal mechanism 3. In this way, the slit electrode sheet 03 can be wound by the winding mechanism 5.

In the above embodiment, since a winding mechanism 5 is provided on the extension path C of the slit electrode sheet 03, the winding mechanism 5 can automatically wind and collect the slit electrode sheet 03, so that the slit electrode sheet 03 forms an electrode sheet roll, thereby facilitating the storage and use of the electrode sheet to be processed 01 after various processing steps are completed.

In some embodiments, as shown in FIG. 1, the winding mechanism 5 includes a first winding assembly 51, a second winding assembly 52, and a winding roll-changing assembly 53; where the first winding assembly 51 and the second winding assembly 52 are both disposed on the extension path C of the slit electrode sheet 03, the winding roll-changing assembly 53 is disposed between the first winding assembly 51 and the second winding assembly 52, and the winding roll-changing assembly 53 is configured to guide the slit electrode sheet 03 to move towards the first winding assembly 51 or the second winding assembly 52, so as to wind the slit electrode sheet 03 by the first winding assembly 51 or the second winding assembly 52.

In these embodiments of this disclosure, two winding assemblies can be provided in one winding mechanism 5, and the two winding assemblies can alternately wind the slit electrode sheet 03 to improve winding efficiency.

Illustratively, along the extension path C of the slit electrode sheet 03, an adjacent first winding assembly 51 and a second winding assembly 52 can be provided, and both the first winding assembly 51 and the second winding assembly 52 can rotate to wind the slit electrode sheet 03.

In another example, a winding roll-changing assembly 53 can be provided between the first winding assembly 51 and the second winding assembly 52. After the slit electrode sheet 03 passing through the second driving mechanism 82 reaches the winding roll-changing assembly 53, the winding roll-changing assembly 53 can guide the slit electrode sheet 03 to reach the first winding assembly 51 or the second winding assembly 52. For example, after the first winding assembly 51 completes winding an electrode sheet roll, the winding roll-changing assembly 53 can guide the slit electrode sheet to the second winding assembly 52, so that the second winding assembly 52 continues to wind the slit electrode sheet 03.

In yet another example, the winding torque of the first winding assembly 51 or the second winding assembly 52 can be controlled to increase the tension on the slit electrode sheet 03. This can increase the friction force acting on each layer of the slit electrode sheet 03 in the wound electrode sheet roll, which can effectively reduce the risk of the wound electrode sheet roll loosening or having uneven sides.

In the above embodiment, since the winding mechanism 5 is provided with a first winding assembly 51 and a second winding assembly 52, and a winding roll-changing assembly 53 is provided between the first winding assembly 51 and the second winding assembly 52, the winding roll-changing assembly 53 can guide the slit electrode sheet 03 to the first winding assembly 51 or the second winding assembly 52, thereby enabling continuous winding of the slit electrode sheet 03, without needing to stop the processing device to replace the electrode sheet roll after one winding assembly completes winding an electrode sheet roll, thus improving the processing efficiency of the electrode sheet to be processed 01.

In some embodiments, as shown in FIG. 1, the winding mechanism 5 further includes a shaping assembly 54, where the shaping assembly 54 is disposed between the first winding assembly 51 and the second winding assembly 52, the shaping assembly 54 is configured to dispose a shaping member on the electrode sheet roll, so as to fix a terminal cut edge of the electrode sheet roll through the shaping member, and the electrode sheet roll is formed by winding the slit electrode sheet 03 by the first winding assembly 51 or the second winding assembly 52.

In these embodiments of this disclosure, after the winding of the electrode sheet roll is completed by the first winding assembly 51 or the second winding assembly 52, the terminal cut edge of the slit electrode sheet 03 on the electrode sheet roll is in a free state, and the terminal cut edge needs to be fixed to prevent the wound electrode sheet roll from unwinding.

Illustratively, a shaping assembly 54 can be disposed between the first winding assembly 51 and the second winding assembly 52, and the shaping assembly 54 can move towards the first winding assembly 51 or the second winding assembly 52, so as to dispose a shaping member on the wound electrode sheet roll through the shaping assembly 54, and dispose the shaping member on the terminal cut edge to fix the terminal cut edge.

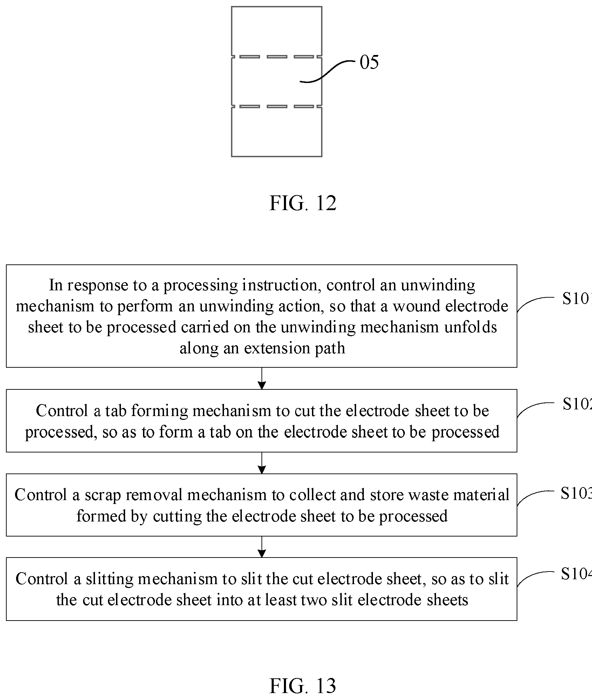

Referring to FIG. 10, FIG. 11, and FIG. 12, FIG. 10 is a first schematic diagram of a structure of an electrode sheet roll according to this disclosure, FIG. 11 is a second schematic diagram of a structure of an electrode sheet roll according to this disclosure, and FIG. 12 is a schematic diagram of a structure of a shaping member according to this disclosure. As shown in FIG. 12, the shaping member 05 may adopt an adhesive tape or the like. Perforated dashed lines are provided on the adhesive tape, and the direction of the perforated dashed lines is the same as the axial direction D of the adhesive tape roll. The adhesive tape roll can be provided on the shaping assembly 54, which helps take off the same size of adhesive tape from the adhesive tape roll each time. The shaping assembly 54 can paste the adhesive tape on the electrode sheet roll. For example, as shown in FIG. 11, three or other numbers of adhesive tapes can be pasted on the terminal cut edge of the electrode sheet roll to fix the terminal cut edge through the adhesive tapes.

In the above embodiment, since a shaping assembly 54 is provided between the first winding assembly 51 and the second winding assembly 52, the shaping assembly 54 can dispose a shaping member 05 on the wound electrode sheet roll, so as to fix the terminal cut edge on the electrode sheet roll through the shaping member 05, thereby reducing the risk of the electrode sheet roll loosening or unwinding.

In some embodiments, as shown in FIG. 1, the winding mechanism 5 further includes a shaping detection assembly 55, where the shaping detection assembly 55 is electrically connected to the shaping assembly 54, the shaping detection assembly 55 is configured to acquire position information of the terminal cut edge on the electrode sheet roll and send a positioning instruction to the shaping assembly 54 based on the position information, and the positioning instruction is used to control the shaping assembly 54 to dispose the shaping member 05.

In these embodiments of this disclosure, under a condition that the position of the terminal cut edge on each electrode sheet roll wound by the first winding assembly 51 or the second winding assembly 52 changes, the shaping assembly 54 may not be able to accurately dispose the shaping member 05 on the terminal cut edge during the process of disposing the shaping member 05 on the electrode sheet roll. Therefore, a shaping detection assembly 55 can be provided between the first winding assembly 51 and the second winding assembly 52, so as to determine the position of the terminal cut edge on the electrode sheet roll through the shaping detection assembly 55.

Illustratively, the shaping detection assembly 55 can be configured as a structure including a driving member and a CCD camera. The CCD camera is disposed on the driving member, and the driving member drives the CCD camera to move, so that the CCD camera faces the electrode sheet roll on the first winding assembly 51 or the second winding assembly 52. In this way, the CCD camera can photograph the electrode sheet roll to acquire an image of the electrode sheet roll including the terminal cut edge. By analyzing the image of the electrode sheet roll, position information including the position of the terminal cut edge on the electrode sheet roll can be acquired.

In another example, the shaping detection assembly 55 can be electrically connected to the shaping assembly 54, that is, the shaping detection assembly 55 is electrically connected to the driving member in the shaping assembly. In this way, a positioning instruction can be sent to the shaping assembly 54 based on the acquired position information of the terminal cut edge, and the positioning instruction includes the position information of the terminal cut edge. The driving member in the shaping assembly 54 responds to the positioning instruction and drives the shaping assembly 54 to move to a position aligned with the terminal cut edge, so that the shaping member 05 can be accurately disposed on the terminal cut edge.

In the above embodiment, since a shaping detection assembly 55 electrically connected to the shaping assembly 54 is provided in the winding mechanism 5, the shaping detection assembly 55 can acquire position information of the terminal cut edge on the electrode sheet roll, thereby allowing for sending a positioning instruction to the shaping assembly 54 based on the position information, which in turn can control the shaping assembly 54 to move to a position aligned with the terminal cut edge, and thus the shaping member 05 can be disposed on the terminal cut edge, thereby improving the accuracy of disposing the shaping member 05 on the electrode sheet roll.

In some embodiments, as shown in FIG. 1, the winding mechanism 5 further includes a pressing assembly 56, where the pressing assembly 56 is provided at positions corresponding to the first winding assembly 51 and the second winding assembly 52, and the pressing assembly 56 is configured to press against the electrode sheet roll that abuts against the first winding assembly 51 and the second winding assembly 52.

In these embodiments of this disclosure, each winding assembly can be provided with a pressing assembly 56. The pressing assembly 56 can be configured as a structure including a driving member and a pressing roller shaft. The driving member can drive the pressing roller shaft to move to approach the electrode sheet roll on the winding assembly, so that the pressing roller shaft presses against the electrode sheet roll. Moreover, a certain pressure can be applied to the electrode sheet roll through the pressing roller shaft.

In the above embodiment, since each winding assembly is provided with one pressing assembly 56, during the process of winding the slit electrode sheet by the first winding assembly 51 or the second winding assembly 52, the pressing assembly 56 can be pressed against the electrode sheet roll, thereby improving the flatness of the slit electrode sheet 03 during winding.

In some embodiments, as shown in FIG. 2, along a direction perpendicular to the extension path C of the electrode sheet to be processed 01, the unwinding mechanism 1 and the winding mechanism 5 are located on a first side F of the electrode sheet to be processed 01, and the scrap removal mechanism 3, and the slitting mechanism 4 are located on a second side G of the electrode sheet to be processed 01, the first side F and the second side G being opposite sides of the electrode sheet to be processed 01.

In the embodiments of this disclosure, when setting the positions of various mechanisms in the electrode sheet processing device, the various mechanisms can be disposed on different sides of the extension path C of the electrode sheet to be processed 01.

Illustratively, along a direction perpendicular to the extension path C of the electrode sheet to be processed 01, the unwinding mechanism 1 and the winding mechanism 5 located at both ends of the electrode sheet processing device can both be disposed on the first side F of the electrode sheet to be processed 01. That is, during the process of operating the unwinding mechanism 1 and loading the electrode sheet to be processed 01 onto the unwinding mechanism 1, operations need to be performed on the first side F. Similarly, during the process of operating the winding mechanism 5 and taking off the electrode sheet roll from the winding mechanism 5, operations also need to be performed on the first side F.

In another example, a separator 95 can further be provided between the various processing mechanisms, and the separator 95 is disposed along the extension path C, which can separate the two sides of the electrode sheet to be processed 01.

In yet another example, along a direction perpendicular to the extension path C of the electrode sheet to be processed 01, the air knife mechanism 31 and the cleaning mechanism 33 in the scrap removal mechanism 3, as well as the tab forming mechanism 2, the slitting mechanism 4, and the like can be disposed on the second side G of the electrode sheet to be processed 01. In this way, when manual operations are required for the air knife mechanism 31, the cleaning mechanism 33, the tab forming mechanism 2, the slitting mechanism 4, and the like corresponding operations need to be performed on the second side G.

In the above embodiment, since the unwinding mechanism 1, the winding mechanism 5, and other mechanisms in the electrode sheet processing device are separately disposed on two sides of the electrode sheet to be processed 01, the loading and unloading zone and the manually operable zone can be located in two unconnected zones, thereby improving operational safety.

In some embodiments, as shown in FIG. 1, the unwinding mechanism 1 includes a first unwinding assembly 11, a second unwinding assembly 12, and an unwinding roll-changing assembly 13; where the first unwinding assembly 11 and the second unwinding assembly 12 are both disposed on the extension path C of the electrode sheet to be processed 01, the unwinding roll-changing assembly 13 is disposed between the first unwinding assembly 11 and the second unwinding assembly 12, and the unwinding roll-changing assembly 13 is configured to guide the electrode sheet to be processed 01 on the first unwinding assembly 11 to move to approach the electrode sheet to be processed 01 on the second unwinding assembly 12, or to guide the electrode sheet to be processed 01 on the second unwinding assembly 12 to move to approach the electrode sheet to be processed 01 on the first unwinding assembly 11.

In these embodiments of this disclosure, the unwinding mechanism 1 can be configured as a structure including at least two unwinding assemblies, and the two unwinding assemblies can alternately supply the electrode sheet to be processed 01 to the electrode sheet processing device.

Illustratively, along the extension path C of the electrode sheet to be processed 01, an adjacent first unwinding assembly 11 and a second unwinding assembly 12 can be provided, and both the first unwinding assembly 11 and the second unwinding assembly 12 can rotate to unfold the carried wound electrode sheet to be processed 01 into a strip-shaped electrode sheet to be processed 01.

In another example, an unwinding roll-changing assembly 13 can be provided between the first unwinding assembly 11 and the second unwinding assembly 12. The unwinding roll-changing assembly 13 can guide the electrode sheet to be processed 01 on one winding assembly to the electrode sheet to be processed 01 on the other winding assembly. For example, when the electrode sheet to be processed 01 on the first unwinding assembly 11 is about to run out, the unwinding roll-changing assembly 13 can guide the electrode sheet to be processed 01 on the second unwinding assembly 12 to the position of the electrode sheet to be processed 01 on the first unwinding assembly 11, so that the electrode sheet to be processed 01 on the first unwinding assembly 11 continues to drive the electrode sheet to be processed 01 on the second unwinding assembly 12 to move to the subsequent processing station.

In the above embodiment, since the unwinding mechanism 1 is provided with a first unwinding assembly 11 and a second unwinding assembly 12, and an unwinding roll-changing assembly 13 is provided between the first unwinding assembly 11 and the second unwinding assembly 12, the unwinding roll-changing assembly 13 can guide the electrode sheet to be processed 01 on one unwinding assembly to the electrode sheet to be processed 01 on the other unwinding assembly, thereby continuously supplying the electrode sheet to be processed 01 to the electrode sheet processing device. Moreover, one of the first unwinding assembly 11 and the second unwinding assembly 12 can be used as a buffer station to place the electrode sheet to be processed 01.

In some embodiments, as shown in FIG. 1, the unwinding mechanism 1 further includes a connecting assembly 14, where the connecting assembly 14 is disposed between the first unwinding assembly 11 and the second unwinding assembly 12, the connecting assembly 14 is configured to dispose a connecting member on the electrode sheet to be processed 01 on the first unwinding assembly 11 or the second unwinding assembly 12, and the connecting member is configured to connect the electrode sheet to be processed 01 on the first unwinding assembly 11 and the electrode sheet to be processed 01 on the second unwinding assembly 12.

In these embodiments of this disclosure, during the process of the electrode sheet to be processed 01 on one unwinding assembly pulling the electrode sheet to be processed 01 on another unwinding assembly to move to a subsequent station, the electrode sheets to be processed 01 on the two unwinding assemblies need to be connected together. Therefore, a connecting assembly 14 can be provided between the first unwinding assembly 11 and the second unwinding assembly 12, and the connecting assembly 14 is disposed at the front end of the unwinding roll-changing assembly 13.

Illustratively, the connecting member can be double-sided tape. The connecting assembly 14 can be configured as a structure including a driving member and a tape applying member, and the driving member can drive the tape applying member to move towards the first unwinding assembly 11 or the second unwinding assembly 12. The tape applying member can apply double-sided tape to the electrode sheet to be processed 01 on the first unwinding assembly 11 or the second unwinding assembly 12. In this way, the electrode sheets to be processed 01 on the first unwinding assembly 11 and the second unwinding assembly 12 can be adhered together by the double-sided tape.

In the above embodiment, since a connecting assembly 14 is provided between the first unwinding assembly 11 and the second unwinding assembly 12, the connecting assembly 14 can dispose a connecting member on the electrode sheet to be processed 01 on the first unwinding assembly 11 or the second unwinding assembly 12, so that the electrode sheets to be processed 01 on the first unwinding assembly 11 and the second unwinding assembly 12 can be connected together under the guidance of the unwinding roll-changing assembly 13.

In some embodiments, as shown in FIG. 1, the unwinding mechanism 1 further includes an unwinding detection member 15, where the unwinding detection member 15 is electrically connected to the first unwinding assembly 11 and the second unwinding assembly 12, separately, the unwinding detection member 15 is configured to detect a lateral shift position of the electrode sheet to be processed 01 on the extension path C, and send a correction instruction to the first unwinding assembly 11 or the second unwinding assembly 12 based on the lateral shift position, and the correction instruction is used to control the first unwinding assembly 11 or the second unwinding assembly 12 to move along an axial direction D of the first unwinding assembly 11.

In these embodiments of this disclosure, during the movement of the electrode sheet to be processed 01 along the extension path C, there is a risk of lateral shift relative to the preset path. An unwinding detection member 15 can be provided at the rear end of the unwinding roll-changing assembly 13, and the unwinding detection member 15 is electrically connected to the first unwinding assembly 11 and the second unwinding assembly 12, separately.

Illustratively, the unwinding detection member 15 can be a through-beam photoelectric sensor or other device. During the movement of the electrode sheet to be processed 01, if the electrode sheet to be processed 01 has a lateral shift, the through-beam photoelectric sensor can generate a corresponding correction instruction. The correction instruction can control the corresponding first unwinding assembly 11 or second unwinding assembly 12 to move along the axial direction D of the first unwinding assembly 11, thereby driving the electrode sheet to be processed 01 to move along the axial direction D of the first unwinding assembly 11, so that the electrode sheet to be processed 01 returns to the preset path.

In the above embodiment, since an unwinding detection member 15 is provided in the unwinding mechanism 1, the unwinding detection member 15 can detect whether the electrode sheet to be processed 01 has a lateral shift on the extension path C. If it is determined that the electrode sheet to be processed 01 has a lateral shift, a correction instruction can be sent to the first unwinding assembly 11 or the second unwinding assembly 12 to control the first unwinding assembly 11 or the second unwinding assembly 12 to move along the axial direction D of the first unwinding assembly 11, thereby driving the electrode sheet to be processed 01 to return to the preset path. This can reduce the risk of the electrode sheet to be processed 01 being pulled off by lateral tension, and can ensure that the electrode sheet to be processed 01 always moves along a fixed extension path C.

In some embodiments, as shown in FIG. 1, the electrode sheet processing device further includes a web splicing mechanism 6, where along the extension path C of the electrode sheet to be processed 01, the web splicing mechanism 6 is disposed between the unwinding mechanism 1 and the tab forming mechanism 2, and the web splicing mechanism 6 is configured to splice a broken electrode sheet to be processed 01.

In these embodiments of this disclosure, during the movement of the electrode sheet to be processed 01 along the extension path C, there is a risk of breakage. To facilitate manual splicing of a broken electrode sheet to be processed 01, a web splicing mechanism 6 can be provided between the unwinding mechanism 1 and the tab forming mechanism 2.

Illustratively, the web splicing mechanism 6 can be disposed on the extension path C of the electrode sheet to be processed 01, and the web splicing mechanism 6 can be configured as a structure including at least two clamping members. The two clamping members can respectively clamp the two ends of the broken electrode sheet to be processed 01, so that the two ends of the broken electrode sheet to be processed 01 are in relatively fixed positions, which facilitates the operator to splice the broken electrode sheet to be processed 01.

In the above embodiment, since a web splicing mechanism 6 is disposed between the unwinding mechanism 1 and the tab forming mechanism 2, the web splicing structure facilitates manual splicing of a broken electrode sheet to be processed 01.

In some embodiments, as shown in FIG. 1, the electrode sheet processing device further includes a second detection assembly 92, where along the extension path C of the electrode sheet to be processed 01, the second detection assembly 92 is disposed between the unwinding mechanism 1 and the tab forming mechanism 2, and the second detection assembly 92 is configured to acquire quality information of the electrode sheet to be processed 01.

In these embodiments of this disclosure, a second detection assembly 92 can be provided between the unwinding mechanism 1 and the tab forming mechanism 2, so as to detect the electrode sheet to be processed 01 through the second detection assembly 92 to determine whether the electrode sheet to be processed 01 has quality defects. The second detection assembly 92 can then acquire quality information of the electrode sheet to be processed 01, and this quality information indicates whether the electrode sheet to be processed 01 has quality defects.

Illustratively, the second detection assembly 92 may be a CCD camera or the like, and the CCD camera can acquire an image of the electrode sheet to be processed 01 to analyze whether the electrode sheet to be processed 01 has quality defects through the image. The second detection assembly 92 may alternatively be other sensors to detect whether there are some quality defects on the electrode sheet to be processed 01 through the sensors.

In the above embodiment, since a second detection assembly 92 is disposed between the unwinding mechanism 1 and the tab forming mechanism 2, the second detection assembly 92 can acquire quality information of the electrode sheet to be processed 01. If it is determined that the electrode sheet to be processed 01 has quality defects, the electrode sheet to be processed 01 with quality defects can be processed in time, thereby reducing the risk of unqualified electrode sheets entering subsequent battery processing steps.

In some embodiments, as shown in FIG. 1, the electrode sheet processing device further includes a reinforcement mechanism 7, where along the extension path C of the electrode sheet to be processed 01, the reinforcement mechanism 7 is disposed on a side of the tab forming mechanism 2 close to the unwinding mechanism 1, the reinforcement mechanism 7 is configured to prepare a reinforcement portion in a tab zone on the electrode sheet to be processed 01, and the tab zone includes a zone on the electrode sheet to be processed 01 where tabs are formed by cutting.

In the embodiments of this disclosure, in order to improve the strength of the tabs formed on the electrode sheet to be processed 01, a reinforcement mechanism 7 can be provided on the side of the tab forming mechanism 2 close to the unwinding mechanism 1, so as to form a reinforcement portion in the tab zone on the electrode sheet to be processed 01 through the reinforcement mechanism 7. For example, the reinforcement portion can be a convex ridge perpendicular to a surface of the electrode sheet to be processed 01.

Illustratively, the reinforcement mechanism 7 can be configured as a structure including two strengthening roller shafts, and the surfaces of the two strengthening roller shafts respectively have corresponding convex strips and grooves. In this way, during the rotation of the strengthening roller shafts, the tab zone on the electrode sheet to be processed 01 passing through the strengthening roller shafts will be squeezed to form multiple convex ridges with consistent concavity and convexity.

In the above embodiment, since a reinforcement mechanism 7 is disposed on the side of the tab forming mechanism 2 close to the unwinding mechanism 1, the reinforcement mechanism 7 can form a reinforcement portion in the tab zone on the electrode sheet to be processed 01, thereby enabling the tab zone of the electrode sheet to be processed 01 passing through the tab forming mechanism 2 to have higher strength.

In some embodiments, as shown in FIG. 1, the electrode sheet processing device further includes a third detection assembly 93, where along the extension path C of the electrode sheet to be processed 01, the third detection assembly 93 is disposed on a side of the tab forming mechanism 2 close to the unwinding mechanism 1, and the third detection assembly 93 is configured to detect a length of the electrode sheet to be processed 01 passing through the third detection assembly 93.

In these embodiments of this disclosure, a third detection assembly 93 can be provided on the side of the tab forming mechanism 2 close to the unwinding mechanism 1, and the third detection assembly 93 is disposed on the extension path C of the electrode sheet to be processed 01, so as to detect the length of the electrode sheet to be processed 01 passing through the tab forming mechanism 2 by the third detection assembly 93.

Illustratively, the third detection assembly 93 may be a device including an encoding roller. During the process of the electrode sheet to be processed 01 passing through the third detection assembly 93, the third detection assembly 93 can detect the length of the electrode sheet to be processed 01 that has passed.

In the above embodiment, since a third detection assembly 93 is disposed on the side of the tab forming mechanism 2 close to the unwinding mechanism 1, the third detection assembly 93 can detect the length of the cut electrode sheet 02 that has passed through the tab forming mechanism 2, and the length data of the obtained cut electrode sheet 02 can be known in time.

Moreover, an embodiment of this disclosure further provides a battery production line, the battery production line including the electrode sheet processing device provided in any one of the above embodiments, a coating device, a cell winding device, and a conveying device; where the coating device is configured to apply an active slurry on a current collector to form an electrode sheet to be processed 01; the cell winding device is configured to wind a separator and a cut electrode sheet 02 to form a battery cell; and the conveying device is configured to transport the electrode sheet to be processed 01 to the unwinding mechanism 1.

In these embodiments of this disclosure, a coating device can be provided on the battery production line. The coating device can apply an active slurry on the current collector. After the active slurry is solidified on the current collector, the electrode sheet to be processed 01 can be obtained. The coating device can also wind the electrode sheet to be processed 01 to form an electrode sheet to be processed 01 roll. For example, the current collector may be a metal foil or a composite current collector. The active material may be lithium phosphate, lithium transition metal oxide, and their respective modified compounds.

In these embodiments of this disclosure, the cell winding device can stack and wind the separator and the cut electrode sheet 02 to obtain a battery cell. The separator and the cut electrode sheet 02 are adjacent, and the wound cut electrode sheet 02 can be separated by the separator.

In these embodiments of this disclosure, the conveying device can transport the electrode sheet to be processed 01 roll to the unwinding mechanism 1 of the electrode sheet processing device. The conveying device can also take down the electrode sheet roll formed on the winding mechanism 5 and transport it to a storage location or to the next processing station.

In the above embodiment, since the battery production line is provided with an electrode sheet processing device, the production efficiency of electrode sheets can be improved, and the qualification rate of electrode sheet processing can also be improved, thereby improving the efficiency and qualification rate of battery processing.

In addition, an embodiment of this disclosure further provides a control method for electrode sheet processing device, the electrode sheet processing device including an unwinding mechanism, a tab forming mechanism, a scrap removal mechanism, and a slitting mechanism. Referring to FIG. 13, FIG. 13 is a first schematic flowchart of a control method for electrode sheet processing device according to this disclosure. As shown in FIG. 13, the control method for electrode sheet processing device includes steps S101 to S104 as follows.

S101. In response to a processing instruction, control the unwinding mechanism to perform an unwinding action, so that a wound electrode sheet to be processed carried on the unwinding mechanism unfolds along an extension path.

In some embodiments, the processing instruction can be generated in response to an operation of a user for the electrode sheet processing device, or in response to the electrode sheet to be processed being placed in position on the unwinding mechanism, or in response to the electrode sheet roll on the winding mechanism being taken away. The embodiments of this disclosure do not limit the scenario in which the processing instruction is generated.

In some embodiments, when starting to process the electrode sheet to be processed, the unwinding mechanism needs to be controlled to perform an unwinding action first. For example, the unwinding assembly carrying the wound electrode sheet to be processed in the unwinding mechanism can be controlled to rotate at a preset speed, so as to drive the wound electrode sheet to be processed to rotate. This allows the wound electrode sheet to be processed to unfold into a thin and long strip, so that the electrode sheet to be processed can unfold along the extension path, that is, the electrode sheet to be processed moves sequentially along the distribution paths of the various processing mechanisms in the electrode sheet processing device.

S102. Control the tab forming mechanism to cut the electrode sheet to be processed, so as to form a tab on the electrode sheet to be processed.

In some embodiments, after the electrode sheet to be processed extends to the tab forming mechanism, the tab forming mechanism can be controlled to perform a cutting action according to a preset path to cut the electrode sheet to be processed. For example, the driving component in the tab forming mechanism can drive the laser cutter to move according to the contour shape of the tab, thereby cutting the electrode sheet to be processed with the laser to form the tab in the tab zone on the electrode sheet to be processed.

S103. Control the scrap removal mechanism to collect and store waste material formed by cutting the electrode sheet to be processed.

In some embodiments, during the process of cutting the electrode sheet to be processed by the tab forming mechanism, under a condition that the tab forming mechanism fails to completely cut off the waste material from the cut electrode sheet, the cut electrode sheet will carry the uncut waste material to the next processing station. If the adhering waste material is not separated from the cut electrode sheet in time, there is a risk of the waste material scratching the tab, causing deformation of the tab or breakage of the cut electrode sheet.

Illustratively, during the process of cutting the electrode sheet to be processed by the tab forming mechanism, the scrap removal mechanism can be simultaneously controlled to perform a recovery action, so as to timely remove the waste material adhering to the cut electrode sheet through the scrap removal mechanism. For example, the scrap removal mechanism can be configured to blow a high-velocity airflow towards the tab zone of the electrode sheet to be processed, so as to blow the waste material away from the cut electrode sheet by the high-velocity airflow. Moreover, the waste material can be transported through a pipeline to a location in the scrap removal mechanism that can store waste material, so as to collect and store the waste material.

S104. Control the slitting mechanism to slit the cut electrode sheet, so as to slit the cut electrode sheet into at least two slit electrode sheets.

In some embodiments, the tab forming mechanism can simultaneously process two rows of tabs on two sides of the cut electrode sheet. Then, after the cut electrode sheet reaches the slitting mechanism, the slitting mechanism can be controlled to slit the cut electrode sheet, so that the cut electrode sheet is slit into two slit electrode sheets.

Illustratively, the slitting knife in the slitting mechanism can be controlled to rotate. During the rotation of the slitting knife, the cut electrode sheet passing through the middle of the slitting knife can be slit into two slit electrode sheets, each with tabs.

The control method for electrode sheet processing device according to the embodiments of this disclosure, since, in response to a processing instruction, the unwinding mechanism is controlled to perform an unwinding action, the electrode sheet processing device can accurately perform various processing actions, and the wound electrode sheet to be processed on the unwinding mechanism can be unfolded into a strip-shaped electrode sheet to be processed at a preset speed. Moreover, controlling the tab forming mechanism to cut the electrode sheet to be processed can form a tab with accurate shape and position on the cut electrode sheet. Furthermore, during the process of the tab forming mechanism cutting the electrode sheet to be processed, the scrap removal mechanism is controlled to collect and store waste material, and the scrap removal mechanism can forcibly separate the waste material adhering to the cut electrode sheet, so as to reduce the risk of the waste material moving with the cut electrode sheet, causing deformation of the tab, or causing breakage of the cut electrode sheet. Additionally, controlling the slitting mechanism to slit the cut electrode sheet can slit the cut electrode sheet into at least two slit electrode sheets, thereby obtaining the electrode sheets required for manufacturing battery cells. Therefore, the control method for electrode sheet processing device according to the embodiments of this disclosure, by controlling the tab forming mechanism and the slitting mechanism to sequentially cut and slit the electrode sheet to be processed, can improve the production efficiency of electrode sheet processing, and by controlling the scrap removal mechanism to forcibly separate adhering waste material, can reduce the adverse effects of waste material on the cut electrode sheet, thereby improving the qualification rate of electrode sheet processing.

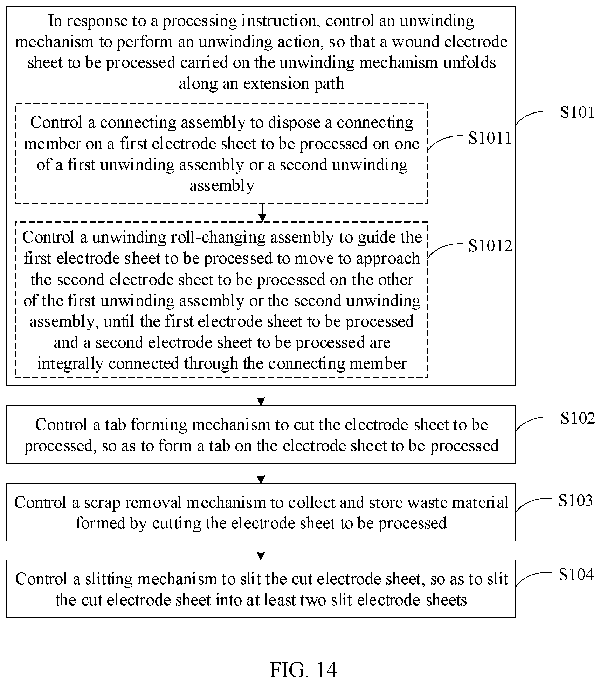

Referring to FIG. 14, FIG. 14 is a second schematic flowchart of a control method for electrode sheet processing device according to this disclosure. The unwinding mechanism includes a first unwinding assembly, a second unwinding assembly, an unwinding roll-changing assembly, and a connecting assembly. Based on FIG. 14, step S101 in FIG. 14 can be implemented by steps S1011 and S1012 as follows.

S1011. Control the connecting assembly to dispose a connecting member on a first electrode sheet to be processed on one of the first unwinding assembly or the second unwinding assembly.

In some embodiments, the first electrode sheet to be processed on one of the first unwinding assembly or the second unwinding assembly is a standby electrode sheet to be processed. When the second electrode sheet to be processed on the other of the first unwinding assembly or the second unwinding assembly is about to run out, the first electrode sheet to be processed needs to be connected to the electrode sheet processing device in time, so that the electrode sheet processing device can continuously process the electrode sheet to be processed.

Illustratively, the standby first electrode sheet to be processed and the second electrode sheet to be processed that is about to be used up can be integrally connected through the connecting member, so that the second electrode sheet to be processed, which is being processed by the electrode sheet processing device, brings the first electrode sheet to be processed into the processing mechanism.

In another example, the connecting assembly can be controlled to dispose a connecting member on the first electrode sheet to be processed. For example, the connecting assembly can be controlled to adhere double-sided tape to the first electrode sheet to be processed.

S1012. Control the unwinding roll-changing assembly to guide the first electrode sheet to be processed to move to approach the second electrode sheet to be processed on the other of the first unwinding assembly or the second unwinding assembly, until the first electrode sheet to be processed and the second electrode sheet to be processed are integrally connected through the connecting member.

In some embodiments, after the connecting member is set on the first electrode sheet to be processed, the unwinding roll-changing assembly can be controlled to guide the first electrode sheet to be processed to move to approach the second electrode sheet to be processed, and until the first electrode sheet to be processed abuts against the second electrode sheet to be processed through the connecting member, the first electrode sheet to be processed and the second electrode sheet to be processed are integrally connected through the double-sided tape acting as the connecting member.

In the above embodiment, since the connecting assembly is controlled to dispose a connecting member on the first electrode sheet to be processed on one of the first unwinding assembly or the second unwinding assembly, and the unwinding roll-changing assembly is controlled to guide the first electrode sheet to be processed to move to approach the second electrode sheet to be processed, the standby first electrode sheet to be processed and the second electrode sheet to be processed that is about to be used up can be integrally connected, so that the first electrode sheet to be processed can be brought into the processing mechanism of the electrode sheet processing device through the second electrode sheet to be processed, thereby enabling the electrode sheet processing device to continuously process the electrode sheet to be processed. This helps improve the utilization efficiency of the electrode sheet processing device and the processing efficiency of the electrode sheet to be processed.

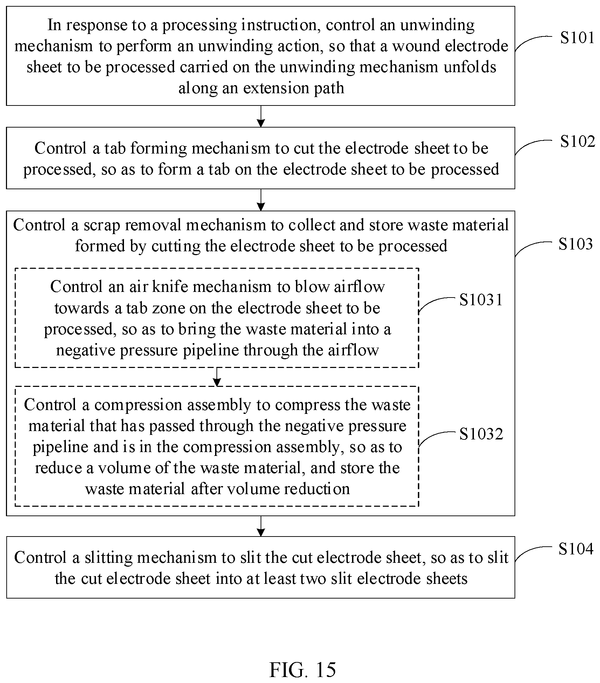

Referring to FIG. 15, FIG. 15 is a third schematic flowchart of a control method for electrode sheet processing device according to this disclosure. The scrap removal mechanism includes an air knife mechanism and a compression assembly that are connected via a negative pressure pipeline. Based on FIG. 13, step S103 in FIG. 13 can be implemented by steps S1031 and S1032 as follows.

S1031. Control the air knife mechanism to blow airflow towards a tab zone on the electrode sheet to be processed, so as to bring the waste material into the negative pressure pipeline through the airflow.

In some embodiments, during the process of cutting the electrode sheet to be processed, the air knife mechanism can be controlled to blow high-velocity gas towards the tab zone on the electrode sheet to be processed, thereby using the high-velocity gas as a power source to separate the waste material adhering to the cut electrode sheet from the cut electrode sheet.

Illustratively, the blowing direction of the air knife mechanism can be set to face the negative pressure pipeline, so that the waste material can be brought into the negative pressure pipeline by the airflow.

S1032. Control the compression assembly to compress the waste material that has passed through the negative pressure pipeline and is in the compression assembly, so as to reduce a volume of the waste material and store the waste material after volume reduction.

In some embodiments, an outlet end of the negative pressure pipeline can be connected to the compression assembly, and the compression assembly can be controlled to compress the collected waste material. For example, when the waste material reaches a preset volume, the compression assembly can be controlled to perform a compression action, or the compression assembly can be controlled to perform a compression action at preset time intervals, thereby compressing the waste material. The waste material whose volume has been reduced due to compression can be temporarily stored in the compression assembly.

In the above embodiment, since the air knife mechanism is controlled to blow airflow towards the tab zone on the electrode sheet to be processed, the airflow can be used as a power source, which facilitates the separation of the adhering waste material from the cut electrode sheet. Moreover, controlling the compression assembly to compress the collected waste material can reduce the volume of the waste material, which facilitates the storage of the waste material and the execution of subsequent processing steps.

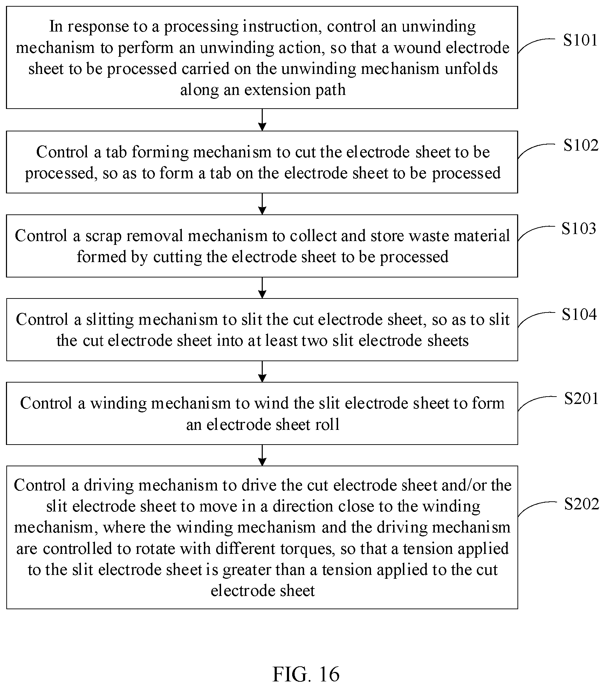

Referring to FIG. 16, FIG. 16 is a fourth schematic flowchart of a control method for electrode sheet processing device according to this disclosure. The electrode sheet processing device further includes a winding mechanism and a driving mechanism. The control method for electrode sheet processing device further includes steps S201 to S202.

S201. Control the winding mechanism to wind the slit electrode sheet to form an electrode sheet roll.

In some embodiments, after all processing steps for the electrode sheet to be processed are completed and the required slit electrode sheet is obtained, the winding mechanism can be controlled to wind only the slit electrode sheet, so that the strip-shaped slit electrode sheet can be wound into an electrode sheet roll.

S202. Control the driving mechanism to drive the cut electrode sheet and/or the slit electrode sheet to move in a direction close to the winding mechanism, where the winding mechanism and the driving mechanism are controlled to rotate with different torques, so that a tension applied to the slit electrode sheet is greater than a tension applied to the cut electrode sheet.

In some embodiments, the driving mechanism can be controlled to drive the cut electrode sheet or the slit electrode sheet to move, so that the electrode sheet to be processed can continuously enter various processing mechanisms.

Illustratively, the torque of the driving mechanism can be set to be greater than the torque of the unwinding mechanism, so that the electrode sheet to be processed and/or the cut electrode sheet and/or the slit electrode sheet located between the driving mechanism and the unwinding mechanism are subjected to a certain tension. Moreover, the torque of the winding mechanism can be set to be greater than the torque of the driving mechanism, so that a tension applied to the slit electrode sheet located between the winding mechanism and the driving mechanism is greater than a tension applied to the cut electrode sheet.

In the above embodiment, since the winding mechanism is controlled to wind the slit electrode sheet, the strip-shaped slit electrode sheet can be formed into an electrode sheet roll, which facilitates the storage and transportation of the electrode sheet roll. Moreover, controlling the winding mechanism and the driving mechanism to rotate with different torques can make the electrode sheet roll subject to greater tension, which is beneficial for making the electrode sheet roll wound more neatly and regularly; and can make the cut electrode sheet and the electrode sheet to be processed subject to less tension, which can reduce the risk of breakage of the cut electrode sheet and the electrode sheet to be processed.

The above embodiments are only used to illustrate the technical solution of this disclosure, and not to limit it; although this disclosure has been described in detail with reference to the foregoing embodiments, those skilled in the art should understand that: they can still modify the technical solutions described in the foregoing embodiments, or make equivalent substitutions for some or all of the technical features therein; and these modifications or substitutions do not cause the essence of the corresponding technical solution to depart from the scope of the technical solutions of the embodiments of this disclosure, and should all be covered by the scope of the specification of this disclosure. In particular, as long as there is no structural conflict, the various technical features mentioned in the various embodiments can be combined in any way.

## Claims

1. An electrode sheet processing device, comprising:
an unwinding mechanism, wherein the unwinding mechanism is configured to carry a wound electrode sheet to be processed;
a tab forming mechanism, wherein the tab forming mechanism is disposed on an extension path of the electrode sheet to be processed and is configured to cut the electrode sheet to be processed;
a scrap removal mechanism, wherein the scrap removal mechanism is disposed on an extension path of a cut electrode sheet and is located on a side of the tab forming mechanism away from the unwinding mechanism, and the scrap removal mechanism is configured to remove waste material formed after the electrode sheet to be processed is cut; and
a slitting mechanism, wherein along the extension path of the cut electrode sheet, the slitting mechanism is disposed on a side of the scrap removal mechanism away from the tab forming mechanism, and the slitting mechanism is configured to slit the cut electrode sheet; the slitting mechanism comprises a first support base, a second support base, a first knife shaft, a second knife shaft, a slitting knife, and an adjustment assembly; wherein along a radial direction of the first knife shaft, the first support base and the second support base are connected; the first knife shaft is rotatably disposed on the first support base, the second knife shaft is rotatably disposed on the second support base, and the first knife shaft and the second knife shaft are disposed in the same axial direction; the corresponding slitting knives are respectively disposed on the first knife shaft and the second knife shaft; the adjustment assembly is disposed between the first support base and the second support base, and along the radial direction of the first knife shaft, the adjustment assembly is configured to adjust a distance between the first support base and the second support base.

2. The electrode sheet processing device according to claim 1, wherein the scrap removal mechanism comprises an air knife mechanism, and the air knife mechanism comprises an air knife bracket, an air knife roller shaft, and an air knife body; wherein the air knife roller shaft is rotatably mounted on the air knife bracket, the cut electrode sheet moves in contact with the air knife roller shaft; the air knife body is mounted on the air knife bracket, the air knife body has an air outlet and an air inlet that are connected, along an axial direction of the air knife roller shaft, the air outlet is directed from a center of the cut electrode sheet towards a tab on the cut electrode sheet, and the air inlet is configured to be connected to an air source.

3. The electrode sheet processing device according to claim 2, wherein the air knife mechanism further comprises a guide member, a contour cover, and a negative pressure pipeline; wherein the guide member is sleeved on the air knife roller shaft along a radial direction of the air knife roller shaft, and is located on a side of the tab on the air knife roller shaft away from the air outlet; and the contour cover is mounted on the air knife bracket, and is positioned opposite the guide member, the contour cover has a suction inlet and a discharge outlet, a shape of the suction inlet is adapted to a shape of the guide member, the suction inlet is located on a flow path of airflow blown out from the air outlet, and the discharge outlet is connected to one end of the negative pressure pipeline.

4. The electrode sheet processing device according to claim 3, wherein the scrap removal mechanism further comprises a compression assembly, wherein the compression assembly is connected to an end of the negative pressure pipeline away from the contour cover, and the compression assembly is configured to compress and accommodate the waste material.

5. The electrode sheet processing device according to any one of claims 2 to 4, wherein the electrode sheet processing device further comprises a first detection assembly, wherein along the extension path of the cut electrode sheet, the first detection assembly is disposed on a side of the air knife mechanism away from the tab forming mechanism, the first detection assembly is configured to acquire image data of the cut electrode sheet, and the image data comprises waste zone information of the cut electrode sheet.

6. The electrode sheet processing device according to claim 5, wherein the electrode sheet processing device further comprises a first marking assembly, wherein along the extension path of the cut electrode sheet, the first marking assembly is disposed on a side of the first detection assembly away from the air knife mechanism, the first detection assembly is electrically connected to the first marking assembly, the first detection assembly is further configured to send a marking instruction to the first marking assembly based on the waste zone information, and the marking instruction is used to control the first marking assembly to mark a waste zone on the cut electrode sheet.

7. The electrode sheet processing device according to any one of claims 1 to 6, wherein the adjustment assembly comprises an adjustment member and a locking member; wherein the adjustment member is slidably disposed between the first support base and the second support base, the locking member is mounted on the first support base or the second support base, the locking member abuts against the adjustment member, and during movement of the locking member relative to the first support base in a direction approaching or moving away from the adjustment member, the locking member is able to drive the adjustment member to move relative to the first support base, so as to adjust a distance between the first support base and the second support base.

8. The electrode sheet processing device according to any one of claims 1 to 6, wherein the slitting mechanism further comprises a slitting positioning assembly, wherein the slitting positioning assembly is mounted on the first support base and/or the second support base, and the slitting positioning assembly is configured to limit a position of the second support base relative to the first support base.

9. The electrode sheet processing device according to any one of claims 1 to 6, wherein the slitting mechanism further comprises a measuring member, wherein one end of the measuring member is connected to the first support base, another end is connected to the second support base, and the measuring member is configured to measure a spacing between the first support base and the second support base.

10. The electrode sheet processing device according to any one of claims 1 to 6, wherein the scrap removal mechanism further comprises a cleaning mechanism, wherein along an extension path of a slit electrode sheet, the cleaning mechanism is disposed on a side of the slitting mechanism away from the unwinding mechanism, the cleaning mechanism is connected to a compression assembly, the cleaning mechanism is configured to remove impurities on the slit electrode sheet, and the compression assembly is configured to compress and accommodate the impurities.

11. The electrode sheet processing device according to any one of claims 1 to 6, wherein the electrode sheet processing device further comprises a plurality of driving mechanisms, wherein the plurality of driving mechanisms are disposed on an extension path of a cut electrode sheet, the driving mechanisms are configured to drive the cut electrode sheet or a slit electrode sheet to move in a direction away from the tab forming mechanism.

12. The electrode sheet processing device according to any one of claims 1 to 11, wherein the electrode sheet processing device further comprises a winding mechanism, wherein along an extension path of a slit electrode sheet, the winding mechanism is disposed on a side of the slitting mechanism away from the scrap removal mechanism, and the winding mechanism is configured to wind the slit electrode sheet.

13. The electrode sheet processing device according to claim 12, wherein the winding mechanism comprises a first winding assembly, a second winding assembly, and a winding roll-changing assembly; wherein the first winding assembly and the second winding assembly are both disposed on the extension path of the slit electrode sheet, the winding roll-changing assembly is disposed between the first winding assembly and the second winding assembly, the winding roll-changing assembly is configured to guide the slit electrode sheet to move towards the first winding assembly or the second winding assembly, so as to wind the slit electrode sheet by the first winding assembly or the second winding assembly.

14. The electrode sheet processing device according to claim 13, wherein the winding mechanism further comprises a shaping assembly, wherein the shaping assembly is disposed between the first winding assembly and the second winding assembly, the shaping assembly is configured to dispose a shaping member on an electrode sheet roll, so as to fix a terminal cut edge of the electrode sheet roll through the shaping member, and the electrode sheet roll is formed by winding the slit electrode sheet by the first winding assembly or the second winding assembly.

15. The electrode sheet processing device according to claim 14, wherein the winding mechanism further comprises a shaping detection assembly, wherein the shaping detection assembly is electrically connected to the shaping assembly, the shaping detection assembly is configured to acquire position information of a terminal cut edge on the electrode sheet roll and send a positioning instruction to the shaping assembly based on the position information, and the positioning instruction is used to control the shaping assembly to dispose the shaping member.

16. The electrode sheet processing device according to any one of claims 13 to 15, wherein the winding mechanism further comprises a pressing assembly, wherein the pressing assembly is provided at each of positions corresponding to the first winding assembly and the second winding assembly, the pressing assembly is configured to press against the electrode sheet roll that abuts against the first winding assembly and the second winding assembly.

17. The electrode sheet processing device according to any one of claims 12 to 16, wherein along a direction perpendicular to the extension path of the electrode sheet to be processed, the unwinding mechanism and the winding mechanism are located on a first side of the electrode sheet to be processed, the scrap removal mechanism, the tab forming mechanism, and the slitting mechanism are located on a second side of the electrode sheet to be processed, the first side and the second side being opposite sides of the electrode sheet to be processed.

18. The electrode sheet processing device according to any one of claims 1 to 17, wherein the unwinding mechanism comprises a first unwinding assembly, a second unwinding assembly, and an unwinding roll-changing assembly; wherein the first unwinding assembly and the second unwinding assembly are both disposed on the extension path of the electrode sheet to be processed, the unwinding roll-changing assembly is disposed between the first unwinding assembly and the second unwinding assembly, the unwinding roll-changing assembly is configured to guide the electrode sheet to be processed on the first unwinding assembly to move to approach the electrode sheet to be processed on the second unwinding assembly, or to guide the electrode sheet to be processed on the second unwinding assembly to move to approach the electrode sheet to be processed on the first unwinding assembly.

19. The electrode sheet processing device according to claim 18, wherein the unwinding mechanism further comprises a connecting assembly, wherein the connecting assembly is disposed between the first unwinding assembly and the second unwinding assembly, the connecting assembly is configured to dispose a connecting member on the electrode sheet to be processed on the first unwinding assembly or the second unwinding assembly, and the connecting member is configured to connect the electrode sheet to be processed on the first unwinding assembly and the electrode sheet to be processed on the second unwinding assembly.

20. The electrode sheet processing device according to claim 18 or 19, wherein the unwinding mechanism further comprises an unwinding detection member, wherein the unwinding detection member is electrically connected separately to the first unwinding assembly and the second unwinding assembly, the unwinding detection member is configured to detect a lateral shift position of the electrode sheet to be processed on the extension path and send a correction instruction to the first unwinding assembly or the second unwinding assembly based on the lateral shift position, and the correction instruction is used to control the first unwinding assembly or the second unwinding assembly to move along an axial direction of the first unwinding assembly.

21. The electrode sheet processing device according to any one of claims 1 to 20, wherein the electrode sheet processing device further comprises a web splicing mechanism, wherein along the extension path of the electrode sheet to be processed, the web splicing mechanism is disposed between the unwinding mechanism and the tab forming mechanism, and the web splicing mechanism is configured to splice a broken electrode sheet to be processed.

22. The electrode sheet processing device according to any one of claims 1 to 21, wherein the electrode sheet processing device further comprises a second detection assembly, wherein along the extension path of the electrode sheet to be processed, the second detection assembly is disposed between the unwinding mechanism and the tab forming mechanism, and the second detection assembly is configured to acquire quality information of the electrode sheet to be processed.

23. The electrode sheet processing device according to any one of claims 1 to 22, wherein the electrode sheet processing device further comprises a reinforcement mechanism, wherein along the extension path of the electrode sheet to be processed, the reinforcement mechanism is disposed on a side of the tab forming mechanism close to the unwinding mechanism, the reinforcement mechanism is configured to prepare a reinforcement portion in a tab zone on the electrode sheet to be processed, and the tab zone comprises a zone on the electrode sheet to be processed where tabs are formed by cutting.

24. The electrode sheet processing device according to any one of claims 1 to 23, wherein the electrode sheet processing device further comprises a third detection assembly, wherein along the extension path of the electrode sheet to be processed, the third detection assembly is disposed on a side of the tab forming mechanism close to the unwinding mechanism, and the third detection assembly is configured to detect a length of the electrode sheet to be processed passing through the third detection assembly.

25. A battery production line, comprising:
the electrode sheet processing device according to any one of claims 1 to 24;
a coating device, wherein the coating device is configured to apply an active slurry on a current collector to form the electrode sheet to be processed;
a cell winding device, wherein the cell winding device is configured to wind a separator and the cut electrode sheet to form a battery cell; and
a conveying device, wherein the conveying device is configured to transport the electrode sheet to be processed to the unwinding mechanism.

26. A control method for electrode sheet processing device, wherein the electrode sheet processing device comprises an unwinding mechanism, a tab forming mechanism, a scrap removal mechanism, and a slitting mechanism, wherein the slitting mechanism comprises a first support base, a second support base, a first knife shaft, a second knife shaft, a slitting knife, and an adjustment assembly; and the control method for electrode sheet processing device comprises:
controlling the adjustment assembly to move relative to the first support base and/or the second support base, so that the adjustment assembly drives the first support base and the second support base to move along a radial direction of the first knife shaft;
in response to a processing instruction, controlling the unwinding mechanism to perform an unwinding action, so that a wound electrode sheet to be processed carried on the unwinding mechanism unfolds along an extension path;
controlling the tab forming mechanism to cut the electrode sheet to be processed, so as to form a tab on the electrode sheet to be processed;
controlling the scrap removal mechanism to collect and store waste material formed by cutting the electrode sheet to be processed; and
controlling the slitting mechanism to slit the cut electrode sheet, so as to slit the cut electrode sheet into at least two slit electrode sheets.

27. The control method for electrode sheet processing device according to claim 26, wherein the unwinding mechanism comprises a first unwinding assembly, a second unwinding assembly, an unwinding roll-changing assembly, and a connecting assembly; wherein the controlling the unwinding mechanism to perform an unwinding action, so that a wound electrode sheet to be processed carried on the unwinding mechanism is enabled to unfold along an extension path comprises:
controlling a connecting assembly to dispose a connecting member on a first electrode sheet to be processed on one of the first unwinding assembly or the second unwinding assembly; and
controlling the unwinding roll-changing assembly to guide the first electrode sheet to be processed to move to approach a second electrode sheet to be processed on the other of the first unwinding assembly or the second unwinding assembly, until the first electrode sheet to be processed and the second electrode sheet to be processed are integrally connected through the connecting member.

28. The control method for electrode sheet processing device according to claim 26 or 27, wherein the scrap removal mechanism comprises an air knife mechanism and a compression assembly that are connected via a negative pressure pipeline; wherein the controlling the scrap removal mechanism to collect and store waste material formed by cutting the electrode sheet to be processed comprises:
controlling the air knife mechanism to blow airflow towards a tab zone on the electrode sheet to be processed, so as to bring the waste material into the negative pressure pipeline through the airflow; and
controlling the compression assembly to compress the waste material that has passed through the negative pressure pipeline and is in the compression assembly, so as to reduce a volume of the waste material and store the waste material after volume reduction.

29. The control method for electrode sheet processing device according to any one of claims 26 to 28, wherein the electrode sheet processing device further comprises a winding mechanism and a driving mechanism; and the control method for electrode sheet processing device comprises:
controlling the winding mechanism to wind the slit electrode sheet to form an electrode sheet roll; and
controlling the driving mechanism to drive the cut electrode sheet and/or the slit electrode sheet to move in a direction close to the winding mechanism, wherein the winding mechanism and the driving mechanism are controlled to rotate with different torques, so that a tension applied to the slit electrode sheet is greater than a tension applied to the cut electrode sheet.
